# EUROPEAN PATENT SPECIFICATION

(11) **EP 3 270 682 B1**
(45) Date of publication and mention of the grant of the patent: **12.12.2018**
(21) Application number: 16721254.7
(22) Date of filing: 04.03.2016
(51) Int. Cl.: A01F 15/07

(54) **BALE FORMING AND WRAPPING APPARATUS WITH A GUIDED WEB MOVING MEMBER**
BALLENFORMUNGS- UND -UMWICKLUNGSVORRICHTUNG MIT EINEM GEFÜHRTEN BAHNBEWEGUNGSELEMENT
APPAREIL DE FORMATION ET D'EMBALLAGE DE BALLES DOTÉ D'UN ÉLÉMENT DE DÉPLACEMENT DE BANDE GUIDÉ

(30) Priority: 18.03.2015 NL 2014482
(43) Date of publication of application: 24.01.2018
(73) Proprietor: Forage Company B.V., 3147 PB Maassluis (NL)
(72) Inventor: REIJERSEN VAN BUUREN, Willem Jacobus, 3147PB Maassluis (NL); VERWEIJ, Rochus, 3147PB Maassluis (NL); VISSER, Arend Cornelis, 3147PB Maassluis (NL)
(74) Representative: AGCO Intellectual Property Department
(86) International application number: PCT/NL2016/050153
(87) International publication number: WO 2016/148565

(56) References cited:
- EP-A1- 1 716 745
- EP-A1- 2 229 810
- EP-A1- 2 229 811
- EP-A2- 2 769 616
- DE-U1- 9 211 541

## Description

### FIELD OF THE INVENTION

The invention refers to a bale forming and wrapping apparatus and to a bale forming and wrapping method for forming and wrapping a bale from loose material, in particular for forming in a drum-shaped bale forming chamber a round-cylindrical bale from agricultural crop material and for wrapping this bale in the bale forming chamber into a net or into several twine strands or into a plastic sheet.

### BACKGROUND OF THE INVENTION

A bale forming apparatus forms from loose material under pressure a bale in a bale forming chamber, in particular a round-cylindrical bale in a drum-shaped bale forming chamber. In the case of a round baler a bale forming means (pressing belts or pressing rollers) rotates the bale in the drum-shaped bale forming chamber. In order to prevent the bale from falling apart, a wrapping device inserts a web of wrapping material, e.g. a net or a plastic sheet, through a wrapping material inlet into the bale forming chamber. The driven bale forming means and the rotated bale together clamp and convey the inserted web. Several layers of wrapping material are placed around at least one surface of the bale in the bale forming chamber. In the case of a round-cylindrical bale the circumferential surface of the bale is wrapped. Afterwards the web is severed. The wrapped bale is ejected out of the bale forming chamber.

Several proposals how to convey the web towards the wrapping material inlet have been made.

The wrapping material is stored on a reservoir outside of the bale forming chamber, e.g. on a supply reel kept in an unrolling station. The typical way of injecting the web through the wrapping material inlet into the bale forming chamber is that a web moving member moves the web towards the wrapping material inlet by applying a pulling force onto the web. The moved web is pulled from a rotatable supply reel or further reservoir and is conveyed towards the inlet and is injected through the wrapping material inlet into the bale forming chamber.

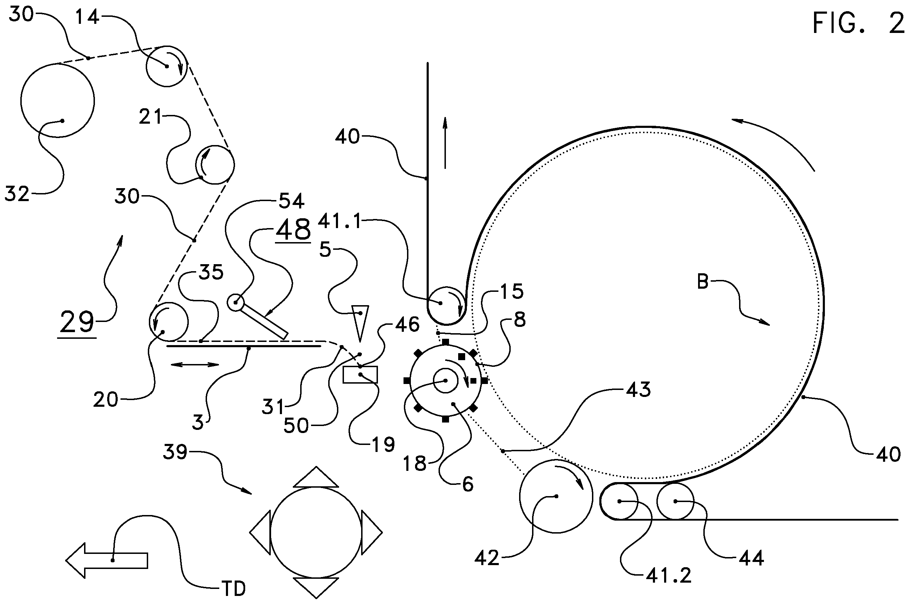

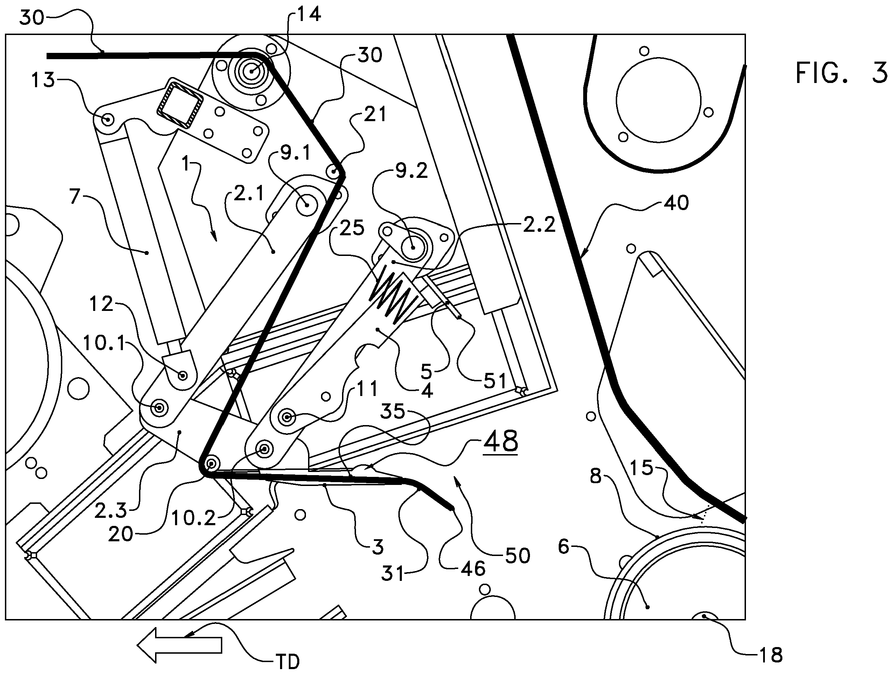

EP 2229811 B1 and EP 2430902 B1 disclose a baler 10 with a bale forming chamber surrounded by pressing rollers 24 and with a wrapping device 18. A reel 50 with a web 32 of wrapping material rests on a roller 52. The roller 52 is driven by the pressing rollers 24 via a chain drive and a clutch 54 comprising three actuators 56. A feeder 40 pulls the web 32 from the supply reel 50 and operates in a duckbill manner. A strut 72 holds a carrier 74 with two opposing plates. The web 32 is clamped between these two plates of the carrier 74. The carrier 74 pulls the clamped web 32 towards an inlet between two pressing rollers 24. Two links 82 and 84 carry the strut 72 via bearings 76 and form a parallelogram linkage, cf. Fig. 2 and Fig. 3. A motor 110 can pivot the upper link 82 and thereby the strut 72 with the carrier 74. The two pivotal arms 92 are carried angularly below the links 82 and 84 and carry a cutting edge 96. A link 112 connects the upper link 82 with the arms 92.

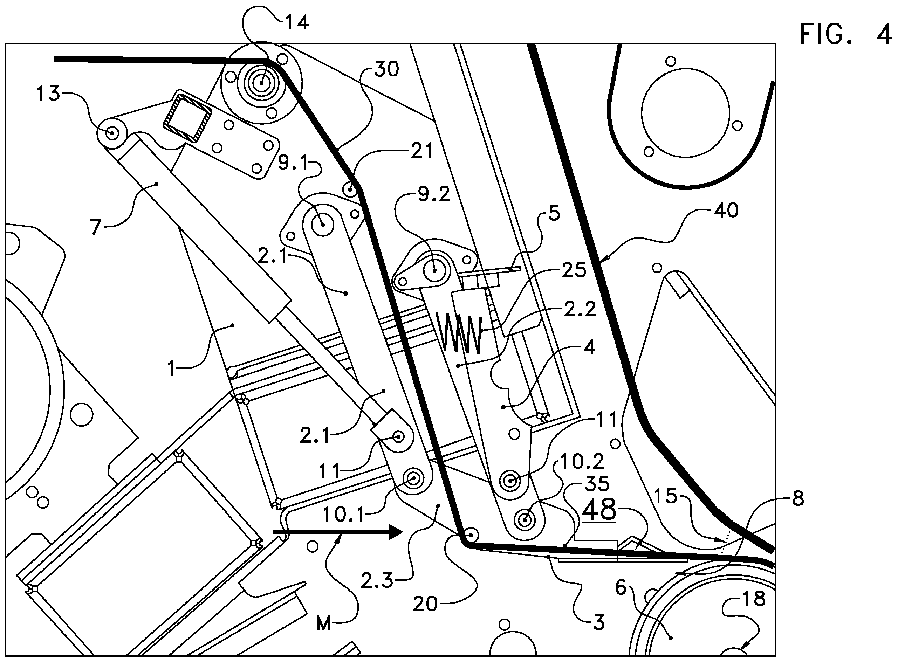

The wrapping device 26 of EP 1595443 B1 pulls a web 28 of wrapping material from a reel 27. The web 28 is guided around several deflecting rollers 50, 48, 47. Fig. 4 shows the wrapping device 26 in a waiting position. For feeding the web 28 an arm (Schwenkarm 34) is pivotal around an axis 36 towards the pressing chamber, cf. Fig. 2. The pivoted arm 34 carries the deflecting roller 47. The sagging leading segment of the web 32 is deposited onto a web feeding roller 38 with ribs 38.1 or onto a stationary guiding sheet 52. The web feeding roller 38 conveys the web 32 towards an inlet 5 into the pressing chamber. The arm 34 is pivotally connected with a lever 41 which carries an arm 43 for the cutting edge (Schneidstange 42). A drive 31 pivots the lever 41 such that the cutting edge 42 severs the web 32, cf. Fig. 4.

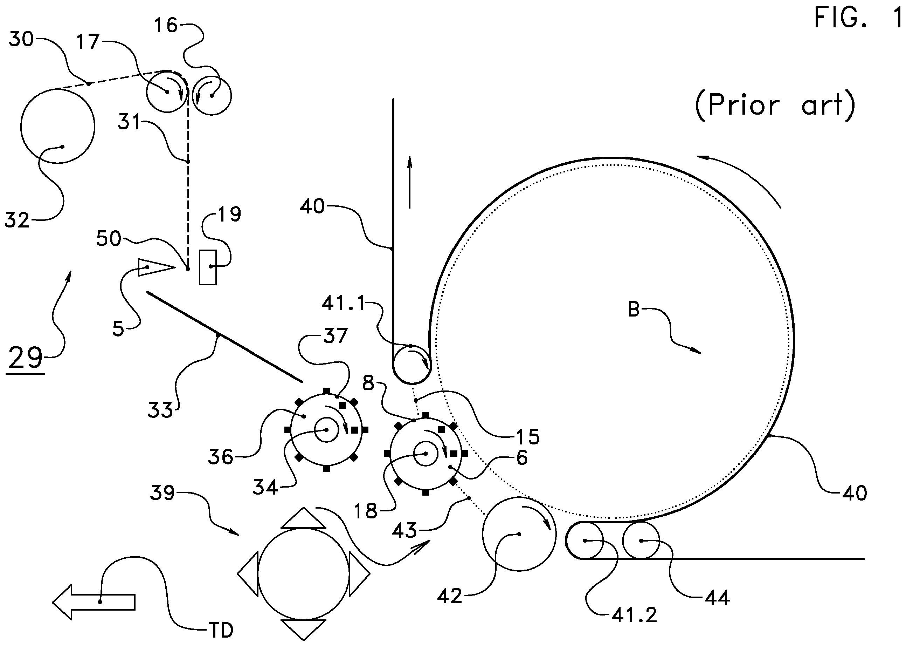

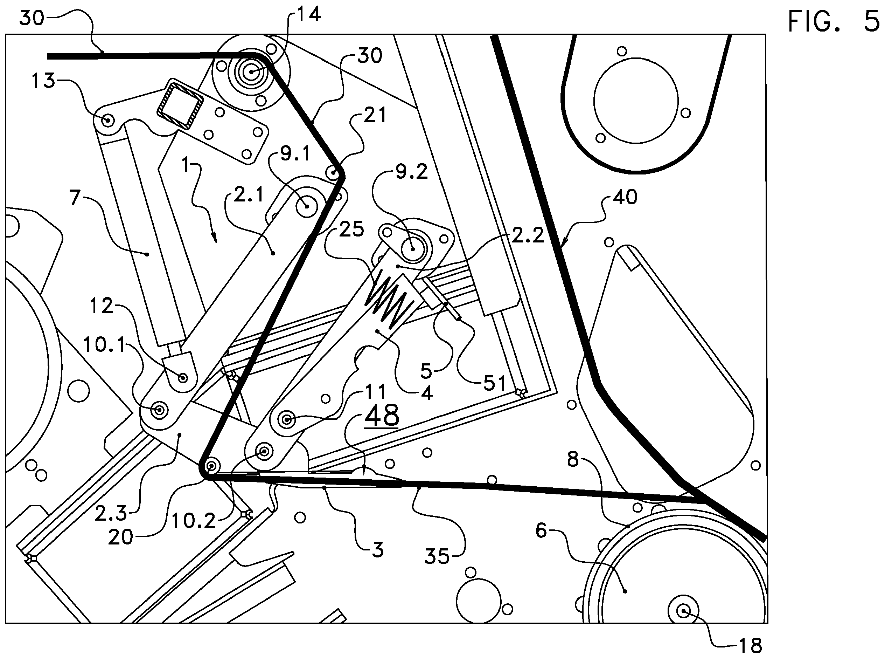

Fig. 1 of US 20090272072 A1 shows a round baler 10 with a bale chamber 16 and a web wrap device 18. The baler 10 forms a round bale in the bale chamber 16 and wraps the bale in the bale chamber 16 into a web 32 of plastic, net, paper, or similar material, cf. par. [0031]. The web 32 is pulled from a supply reel and is conveyed by means of a drive roll 36, cf. Fig. 2. A web carrier 40 can be moved between a rest position (Fig. 1) and a delivery position (Fig. 3). The web carrier 40 is guided by a parallelogram linkage 48 and is moved by an actuator 42, cf. Fig. 2. A stationary element 56 and a moveable element 58 together clamp a front portion of the web 32, cf. Fig. 4 and Fig. 5. The moveable element 58 is positioned above the stationary element 56. The stationary element 56 forms a part of a circle, cf. Fig. 2 and Fig. 3. The stationary element 56 is curved in a vertical direction and comprises a leading edge 86 which is bent in a horizontal direction, cf. Fig. 5. The moveable element 58 can pivot to and away from the bale chamber 16 and moves towards the stationary element 56. The moveable element 58 is pivotally mounted at a bearing 52, cf. par. [0037]. Web 32 is located between the moveable element 58 and the stationary element 56, cf. par. [0037].

Fig. 1 of DE 102004023701 A1 shows a baler ("Maschine 1") with a bale forming apparatus ("Ballenformeinrichtung 2") in a bale forming chamber ("Ballenkammer 3"). Crop material is conveyed through an inlet ("Einlassoffnung 4"). Wrapping material ("Wickelmaterial 28") is inserted through a further inlet 5 into the chamber 3. A wrapping device ("Wickelvorrichtung 26") for wrapping a bale 29 comprises a reservoir ("Vorratsspeicher 27") and a positioning means ("Stellmittel 31") with a lever arrangement ("Hebelanordnung 33") at the side 32, cf. Fig. 2. A first lever arm ("erster Schwenkarm 34") can be pivoted around an axis 36. A guiding plate ("Führungsplatte 37") and a conveying unit ("Förderelement 38") in the form of a roller together form a guiding track for the wrapping material 28. The guiding plate 37 can be shifted by the lever arm 34. Fig. 2 shows the wrapping device operated in the feeding position ("Zufuhrstellung"). The wrapping material 28 is guided around the guiding rollers ("Umlenkrollen 47, 48") and around a cutting rod ("Schneidestange 42") into the nip 5 arranged between the two rollers 11, cf. Fig. 2. A brake ("Bremse 44") decelerates and stops the feeding of further wrapping material 28. The roller 38 and afterwards the rotating bale 29 grasp the wrapping material 28. The positioning means 31 pivots the lever arm 34 into the position of Fig. 3. The brake 44 is released. If the wrapping of the bale 29 is completed, the cutting arm 43 is moved into the position of Fig. 4 and the wrapping material 28 is severed. The leading edge of the wrapping material 28 is disposed on the feeding table ("Zuführtisch 52") or directly on the feeding roller 38. The feeding table 52 improves the transfer of the wrapping material 28 into the inlet 5.

The wrapping device 100 of EP 1808065 B1 comprises a feeding means 2 and a supporting means 3. Two rollers 21 and 22 of the feeding means 2 pull a web 1 from a reel 10, cf. Fig. 2. A plate 31 of the supporting means 3 is mounted on the free ends of two pivotal bars 32. The plate 31 is pivoted towards an inlet 5 and pulls the web 1 from a reel and moves it towards the inlet 5, cf. Fig. 2 and Fig. 3. Afterwards the plate 31 is stopped and supports the web 1 from below.

Fig. 1 of DE 9211541 U1 shows a round baler with a chamber for creating and wrapping a bale ("Wickelraum 8"). The bale rotates in the direction of the arrow 12 and is to be wrapped into wrapping material ("Füllbahn 13") which is initially stored on a reel ("Vorratsrolle 15"). Two feeding rollers ("Abzugswalzen 18, 19") pull wrapping material 13 from the reel 15. A jogger element ("Rüttelteil 24") rotates a pivoting axis ("Schwenkachse 25") being perpendicular to the drawing plane of Fig. 2 and Fig. 3. A lever 26 connects the jogging element 24 with a spring ("Feder 27"). A rope ("Seil 28") extends the spring 27 which in turn makes the jogging element 24 rotating. A connecting lever ("Koppelglied 29") is pressed against a kind of a cam ("Kurvenbahn 30"). This cam 30 belongs to a wrapping roller ("Wickelwalze 9"). The wrapping roller 9 with the cam 30 rotates around the axis 32. The rotating cam 30 makes the connecting lever 29 oscillating. The wrapping material 18 sags down from the feeding rollers 18, 19 and is guided by the oscillating jogging element 24 towards the inlet ("nip 7"). A guiding sheet ("Leitblech 35") closes the space between the feeding roller 19 and the wrapping roller 9. This element prevents the wrapping material 13 to be guided against the wrapping roller 9 which event is undesired.

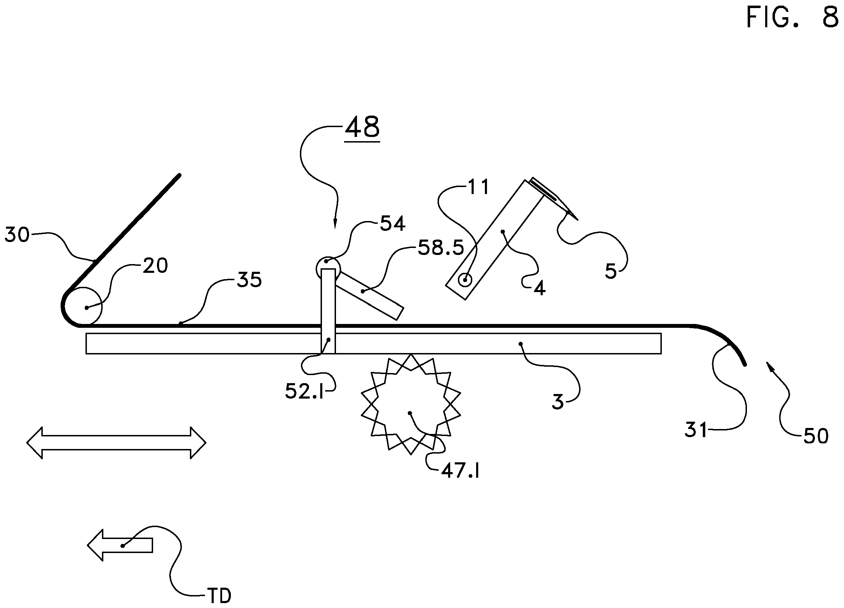

Fig. 1 of WO 2011/033494 A1 shows a baler 1 which forms a bale in a compressing chamber by using a compression belt 18 guided around several support rollers 20. Crop material is guided into the chamber through an inlet between the two rollers 30, 31. Binding material (netting material 39) is provided by a dispenser 38 and is inserted through an inlet 37 between the bale forming roller 32 and the compression belt 18. A deflecting roller 42 deflects and feeds the netting material 39 into the inlet 37, cf. Fig. 2. Two spaced apart carrying plates 43 carry the deflecting roller 42 and are mounted on a pivot shaft 44 which is pivotally mounted at both side walls 10. A drive transmission 41 drives the roller 42 continuously in the direction of the arrow G, i.e. clockwise. The pivot shaft 44 pivots the deflection roller 42 into a deflecting position, shown in Fig. 2 and Fig. 3, in which the deflection roller 42 guides the netting material 39, and into an idler position shown in Fig. 1. When the deflection roller 42 is in the idler position, material can fall through the inlet 37 back to the ground. A hydraulic ram 50 and a lever 51 move the deflection roller 42 into the idler position. In turn a gas spring 56 moves the deflection roller 42 in the deflecting position, cf. Fig. 4 and Fig. 5. A guide means with a plurality of flexible guide fingers 71 guides the netting material 39 away from the compression belt 38 and towards the bale forming roller 32 such that the compression belt 38 cannot press the netting material 39 out of the inlet 37, cf. Fig. 8(a) to Fig. 8(b). These figures also show the effect of the deflection roller 42.

### SUMMARY OF THE INVENTION

A problem solved by the invention is to provide a bale forming and wrapping apparatus with the features of the preamble of claim 1 and a bale forming and wrapping method with the features of the preamble of claim 17 which are arranged to move a web of wrapping material towards the wrapping material inlet with increased reliability and which can subsequently be used for different kinds of wrapping material without the need of adapting the web providing device to the currently used kind of wrapping material.

This problem is solved by a bale forming and wrapping apparatus with the features of claim 1 and by a bale forming and wrapping method with the features of claim 17. Preferred embodiments are specified in the depending claims.

The bale forming and wrapping apparatus according to the invention comprises
- a bale forming means and
- a web providing device.

The web providing device comprises
- a web moving member and
- a guiding member for the web moving member.

The bale forming means surrounds entirely or at least partially and thereby provides a bale forming chamber. A wrapping material inlet leads into this bale forming chamber. The web providing device is positioned outside of this bale forming chamber and is arranged to move a web of wrapping material towards the wrapping material inlet. The bale forming and wrapping apparatus is arranged
- to form a bale in the bale forming chamber,
- to inject the moved web through the wrapping material inlet into the bale forming chamber, and
- to wrap at least one surface of the bale in the bale forming chamber into the injected web.

The web moving member comprises a supporting plate. The supporting plate has an upper surface which contacts and supports the web in a contacting area having a width and a length, i.e. a dimension in the moving direction and a dimension perpendicular to the moving direction. This supporting plate can be moved towards the wrapping material inlet and is arranged to support from below a slack leading segment of the web of wrapping material while the supporting plate. By this movement the supported leading segment of the web is moved towards the wrapping material inlet, i.e. the supporting plate is arranged to carry the moved slack leading segment such that the moved leading segment remains slack until it reaches the wrapping material inlet.

The term "leading" refers to the direction in which the web is conveyed on its way from a reservoir towards the wrapping material inlet and therefore to a direction which points towards the wrapping material inlet. The leading segment begins in the leading edge of the web or begins adjacent to this leading edge. The term "slack" indicates that no tensioning forces are applied onto the leading segment until the leading segment reaches the wrapping material inlet wherein the tensioning forces tend to tension the leading segment and therefore tend to increase the segment's length.

The bale forming and wrapping apparatus according to the invention operates as follows:
- The bale forming means forms a bale in the provided bale forming chamber.
- A sufficiently long leading segment of the web of wrapping material rests on the supporting plate.
- When resting on the supporting plate the leading segment is slack, i.e. is not tensioned until it reaches the wrapping material inlet.
- The web moving member is moved towards the wrapping material inlet and is in contact with the web and moves the leading segment of the web of wrapping material towards the wrapping material inlet.
- While the web moving member is moved, the supporting plate is moved towards the wrapping material inlet and supports the leading segment of the web from below while the web moving member moves the leading segment.
- The leading segment on the supporting plate remains slack while the leading segment is moved and while the moved leading segment is supported from below by the supporting plate. The web moving member does neither apply a clamping force nor a tensioning force onto the moved web. In particular the length of the leading segment is not substantially changed by tensioning the web until the leading segment reaches the wrapping material inlet.
- The guiding member guides the web moving member while the web moving member carries and moves the leading segment towards the wrapping material inlet. The supported leading segment remains slack until it reaches the wrapping material inlet.
- The slack leading segment of the web is injected through the wrapping material inlet into the bale forming chamber.
- The bale forming and wrapping apparatus wraps at least one surface of the bale in the bale forming chamber into the web which has been injected into the bale forming chamber.

### ADVANTAGES

The web moving member touches and actively moves and conveys the web towards the wrapping material inlet. Therefore the risk of a malfunction is significantly reduced compared with a passive guiding sheet and with a stationary roller, in particular with a roller which can only rotate around its own center axis. In particular the operation of the web moving member reduces the risk that the web does not reach the wrapping material inlet. This risk can in particular occur if the bale forming and wrapping apparatus belongs to a vehicle which is moved over ground and can be operated in a hilly terrain or can be subjected to environmental impacts, e.g. wind or rain.

According to the invention a slack leading segment of the web rests on the supporting plate while the web moving member comprising the supporting plate touches the web from below and moves the web towards the wrapping material inlet. The leading segment remains slack while the web moving member moves the leading segment and until the leading edge of the web passes the wrapping material inlet and reaches the bale forming chamber.

As the leading segment remains slack while being moved, it is not necessary that the web moving member pulls the leading segment in a direction towards the wrapping material inlet. Therefore it is not necessary to pull a web of wrapping material from a wrapping material reservoir until the web reaches the wrapping material inlet. While the web is moved it is not necessary to surpass the friction force acting against the rotation of the reservoir. This friction force can hardly be predicted. Less torque for moving the web moving member is required.

In a conventional baler the web of wrapping material is often pulled from a reservoir for wrapping material, e.g. from a supply reel rotatably held by an unrolling station, by two pulling rollers or two yaws of a duckbill which clamp and convey the web. Or a teethed element pulls from the reservoir a net serving as the wrapping material. This teethed element cannot be used for wrapping a bale into plastic sheet as the teeth may damage the plastic sheet. The baler according to the invention, however, conveys the web by moving the web moving member with the supporting plate on which the slack leading segment rests. This feature provides a web providing device which does not require such pulling rollers or yaws. Therefore the web providing device can process different kinds of wrapping material, in particular net as well as plastic sheet.

Further disadvantages of a web moving member with yaws or pulling rollers are: The yaws may damage the web. The yaws must be moved in a synchronized manner. The circumferential surfaces of a pair of pulling rollers are subjected to wear. The time for moving the web significantly depends on the frictional force between the web and the rollers. These disadvantages are avoided by the web moving member according to the invention. Such pulling rollers or yaws can, however, also be combined with the invention.

As the leading segment remains slack until it passes the wrapping material inlet, it is not necessary that the leading segment of the web is pulled while being moved towards the wrapping material inlet. In particular it is not necessary that two elements, e.g. two yaws of a duckbill-like device or two pulling rollers, clamp and pull the web.

The feature with the slack leading segment of the web does not apply a substantial tension onto the web while the web is moved towards the wrapping material inlet. In particular the movement of the supporting plate carrying the leading segment does not pull further wrapping material (additional to the leading segment) from a reservoir for wrapping material, e.g. from a rotatably mounted supply reel. As no wrapping material is pulled until the web reaches the wrapping material inlet, the invention saves the need of providing mechanical power which is in conventional balers needed for pulling and tensioning the moved web. A very high applied tension may even damage the web. Thanks to the invention it is not necessary to clamp the web on its way to the wrapping material inlet. Clamping the web may also damage the web, e.g. by tearing a hole in it.

The process of transporting the web can depend on elastic properties of the wrapping material if the web is pulled or tensioned. A baler according to the invention avoids the risk of damaging the web and operates substantially independently from elastic properties of the wrapping material. The time for moving the web towards the wrapping material inlet remains substantially constant from bale to bale - regardless of the kind of wrapping material and of the environmental conditions. This makes it easier to control the wrapping process.

Thanks to the feature with the slack leading segment the process of moving the leading segment does substantially not depend on elastic properties of the wrapping material. This is an advantage compared with a web moving member comprising a supporting plate and tensioning the web: These elastic properties can have a significant influence on the friction force between the moved supporting plate and the supported and carried leading segment. Different kinds of wrapping material can have different elastic properties such that different tensioning and/or retracting forces between the supporting plate and the leading segment resting on the supporting plate can occur. The feature with the slack leading segment substantially removes the influence of elastic properties of the wrapping material and thereby increases the reliability. Thanks to the feature that the moved leading segment remains slack these different elastic forces have substantially less influence on moving the web towards the wrapping material inlet. The same web providing device can subsequently be used with different kinds of wrapping material.

The process of moving the leading segment does also not depend on the friction between the web and an element which contacts and moves the web. Nearly no slippage between the web and the moving element occurs. This makes it easier to control and monitor the process of moving the web towards the wrapping material inlet. The time for moving the web to the wrapping material inlet does not significantly depend on wrapping material properties.

Of course the web can be tensioned after it has been injected through the wrapping material inlet into the bale forming chamber. In general the web is securely clamped between the bale forming means and the rotated bale and is pulled by them. At least after the web is injected into the bale forming chamber, the reservoir is decelerated in order to achieve a tension in the web.

In addition the supporting plate below the leading segment prevents the undesired event that a portion of the web drops below the web moving member and is grasped by a rotating part of the baler below the wrapping material inlet, e.g. by a conveyor rotor with rigid tines. In addition moving a supporting plate requires less mechanical parts and less mechanical synchronization compared with a web moving member with two moveable parts clamping the web and acting like a duckbill.

One embodiment of some conventional balers is that a stationary or moved guiding sheet and afterwards a rotated web feeding roller convey the web towards the wrapping material inlet. The web feeding roller has a conveying surface, often with longitudinal ribs, and is positioned outside of the bale forming chamber and adjacent to the wrapping material inlet. The problem may occur that crop material between the wrapping material inlet and the web feeding roller causes a jam.

The supporting plate according to the invention, however, enables to use a web providing device without such a guiding sheet and without such a web feeding roller. It is also possible to combine the invention with such a guiding sheet and/or with such a web feeding roller.

### PREFERED EMBODIMENTS

According to the invention the web moving member is guided and moved and moves the leading segment towards the wrapping material inlet. Preferably the web moving member is itself moved from a parking position towards the wrapping material inlet into an adjacent position. The web moving member can remain in the parking position while the bale is formed from loose material in the bale forming chamber. In this parking position a larger distance between the web moving member and the wrapping material inlet occurs. The web moving member is moved away from the position adjacent to the wrapping material inlet back into the parking position after the bale forming means and the rotated bale together have clamped and grasped the injected web of wrapping material.

The different possible positions of the web moving member reduce this jam risk. While the web moving member is in the remote parking position and has the higher distance, debris and other loose material can drop through the space between the web moving member and the wrapping material inlet and do not cause congestion adjacent to the wrapping material inlet. A stationary web feeding roller or a guiding sheet has a higher jam risk.

A longer distance between the wrapping material inlet and the web moving member being in the parking position occurs - compared with the web moving member being in the position adjacent to the wrapping material inlet. This larger distance suffices for providing enough space for a slack leading segment.

In one implementation the supporting plate engages into the wrapping material inlet when the web moving member is moved into the adjacent position. This implementation increases the reliability of moving the web as the risk is reduced that the web is not properly injected. The supporting plate may remove debris out of the wrapping material inlet.

Preferably the web moving member is moved from a parking position towards the wrapping material inlet into an adjacent position. After the injected web is grasped by the bale forming means and the rotated bale in the bale forming chamber, the web moving member is moved back into the parking position. This back movement can be triggered after a given timespan has passed or after the event is detected that the web has be grasped and is pulled. Preferably the web moving member being moved into the or being in the parking position contributes to tensioning the web. In one implementation the web is guided around a deflecting element which belongs to the web moving member. When the web moving member is moved away from the wrapping material inlet, this deflecting element tensions the web. When the web moving member is in the parking position, this deflecting element also tensions the web.

According to the invention the leading segment resting on the supporting plate remains slack while the web moving member with the supporting plate moves the web towards the wrapping material inlet. A part of the web extends from the reservoir to the leading edge (front edge) of the web. This part is moved towards the wrapping material inlet and comprises the slack leading segment on the supporting plate. Preferably this web part is so long that no web needs to be taken from the reservoir while the leading segment is moved towards the wrapping material inlet. In the case of a rotatable supply reel as the reservoir the supply reel is preferably not rotated until the web reaches the wrapping material inlet. Web is taken from the reservoir, however, after the leading edge has entered the bale forming chamber. This embodiment saves the need of providing any conveying member, e.g. two pulling rollers, which pull wrapping material from the reservoir. The web is only pulled from the reservoir after being injected into the bale forming chamber, namely by the bale forming means and the rotated bale. No friction force occurring when the supply reel rotates has to be surpassed until the web is injected and grasped.

The slack leading segment rests on an upper surface of the supporting plate while the web moving member moves the web towards the wrapping material inlet. In one embodiment the supporting plate has a flat upper surface. This upper surface can be implemented as a smooth surface, e.g. made from glossy steel, or can comprise a material with a higher friction, e.g. rubber. Such a flat surface can easily be kept clean of debris.

In a further embodiment several protruding elements, e.g. ribs or conical or tapering elements, are mounted on the upper surface or at the leading edge of the supporting plate. These protruding elements reduce the risk of a movement of the slack leading segment resting on the plate relative to the upper surface of the supporting plate. Even in this embodiment it is not necessary that the protruding elements pull the leading segment on the supporting plate.

Preferably the web moving member further comprises a downholder unit which is positioned above the supporting plate. The web is positioned between the supporting plate and the downholder unit. The downholder unit above the supporting plate is arranged to keep the slack leading segment of the web on the supporting plate, also while the supporting plate is moved towards the wrapping material inlet. When resting on the moved supporting plate the slack leading segment of the web is positioned between the supporting plate and the downholder unit. The leading segment on the supporting plate remains slack while the leading segment is moved and while the moved leading segment is supported from below by the supporting plate and is kept by the downholder unit. The downholder unit keeps the web on the moved supporting plate and inhibits a substantial relative movement of the leading segment with respect to the supporting plate even in the case of wind and rain.

The downholder unit above the supporting plate keeps the slack leading segment on the moved supporting plate wherein the leading segment is below the downholder unit. The downholder unit inhibits a substantial relative movement of the leading segment with respect to the moved supporting plate even if the apparatus is operated in a hilly terrain or is subjected to wind.

In one embodiment the downholder unit is moved together with the supporting plate towards the wrapping material inlet. During the common movement the downholder unit is preferably not moved with respect to the supporting plate. This embodiment increases the reliability of the web providing device as the risk is further reduced that the web moves relative to the supporting plate.

In one embodiment the downholder unit is mechanically coupled with the supporting plate. A mechanical coupling element inhibits a movement of the downholder unit relative to the supporting plate while the supporting plate is moved towards the wrapping material inlet.

In one implementation the downholder unit comprises at least one flap which is mounted at the supporting plate - or carried by a holder which is mounted at the supporting plate. The or every flap is positioned above the supporting plate. The or at least one flap touches the upper surface of the supporting plate - or a leading segment resting on the supporting plate. In one implementation the flap is made of elastic material.

In one implementation the downholder unit keeps the slack leading segment on the supporting plate just by the weight of the downholder unit. It is also possible that a biasing member, e.g. a helical spring or a hydraulic or electric actuator, biases the downholder unit against the supporting plate and thereby against a leading segment resting on the supporting plate. It is possible that this further actuator can move the downholder unit away from the supporting plane. This movement can in particular be performed for the purpose of inserting a new web into the space between the supporting plate and the downholder unit after a new wrapping material reservoir is placed in the web providing device.

According to the invention the guiding member guides the web moving member towards the wrapping material inlet. According to a preferred embodiment the web moving member is guided such that the supporting plate is not pivoted or tilted with respect to the wrapping material inlet while being moved towards the wrapping material inlet. Every element of the supporting plate is moved along the same trajectory. This trajectory can be a linear translation or a curve segment. The feature that the supporting plate is neither rotated nor pivoted nor tilted further reduces the risk of an undesired movement of the leading segment relative to the supporting plate and further increases the reliability that the web reaches the wrapping material inlet.

In one implementation the supporting plate is moved towards the wrapping material inlet with a constant angle with respect to the ground, i.e. remains in a horizontal orientation or is moved with a constant sloping angle downwards or upwards while the web moving member is guided towards the wrapping material inlet. The leading segment of the web rests on the linearly moved supporting plate and remains in a slack state while being moved towards the wrapping material inlet. This slack leading segment therefore also performs a purely linear movement while being moved. Thanks to the linear movement of the leading segment the risk is further reduced that the leading segment is shifted relative to the supporting plate.

In one implementation the guiding member is implemented as a parallelogram guider comprising two parallel lever members. The parallelogram guider guides the web moving member. Preferably the supporting plate is pivotally connected with the parallelogram guider. In one embodiment this parallelogram guider guides the web moving member such that the supporting plate performs a guiding movement towards the wrapping material inlet without being pivoted or tilted. In one implementation the guiding member guides the supporting plate along a linear trajectory while the supporting plate is moved. In a further embodiment the parallelogram guider guides the support plate along a curved trajectory.

The feature with the parallelogram guider provides a very robust mechanical construction. It is possible to position an actuator for the guiding member in a lateral position with respect to the guiding member. This embodiment saves the need of connected an actuator directly with the moveable supporting plate.

In a further implementation the supporting plate is guided by at least one guiding rail, preferably two lateral and parallel guiding rails. This embodiment enables a very easy implementation of the guiding member.

Preferably the or every guiding rail is mounted below the supporting plate or at the two lateral edges of the supporting plate. The web does not come in contact with the rails for the supporting plate. The supporting plate reduces the risk that debris or dirt pollutes a guiding rail.

In one embodiment a guiding member actuator is connected with the guiding member and moves the guiding member. The moved guiding member moves the web moving member towards the wrapping material inlet. In one implementation the guiding member guides the supporting plate such that the supporting plate performs a movement without being pivoted or tilted, e.g. remains in a horizontal orientation. Preferable the guiding member actuator is controlled by a control unit and can be triggered and moved independently from other moveable parts of the baler. Thanks to the guiding member actuator the web moving member can be moved at the right time and independently from other moved parts of the bale forming and wrapping apparatus. The embodiment that the guiding member actuator is connected with the guiding member saves a direct mechanical connection between the guiding member actuator and the web moving member. Such a mechanical connection can form an obstacle for placing or moving a slack leading segment on the supporting plate.

In addition the embodiment with the guiding member actuator moving the guiding member enables implementing a lever arm: A short movement of the guiding member actuator causes a movement over a long distance of the supporting plate towards the and away from the wrapping material inlet. Such a lever arm can be implemented as the step of moving the supporting plate without pulling at the web only requires little force. This embodiment makes it possible to implement the guiding member actuator by means of at least one piston-cylinder device wherein the cylinder only needs to perform short strokes for moving the web moving member. Therefore the piston-cylinder device can be implemented such that it requires less space than other actuators. It is also possible that an actuator directly moves the guided supporting plate.

In one implementation the guiding member actuator is positioned below the supporting plate. Preferably the guiding member actuator contacts from below the supporting plate. Thanks to the position below the supporting plate the risk is significantly reduced that debris or dirt drops from above onto the guiding member actuator. The supporting plate operates as a cover. In one implementation the guiding member actuator below the supporting plate comprises at least one sprocket wheel or helical spiral which engages into corresponding teeth at the lower side of the supporting plate. This implementation saves space and nevertheless enables to move the supporting plate over a large distance from a parking position to an adjacent position. A desired transmission ratio between the actuator and the supporting plate can be selected when constructing the apparatus.

In one embodiment the web providing device comprises a severing device. After at least one surface of the bale in the bale forming chamber is wrapped into the required numbers of wrapping material, the severing device severs the web of wrapping material at a severing location. The severing location is positioned outside of the bale forming chamber. Preferably the severing location is arranged between the supporting plate and the wrapping material inlet - at least when the supporting plate is in a parking position and has the largest distance to the wrapping material inlet. It is possible that the supporting plates moves along the severing location when being moved towards the wrapping material inlet. Thanks to the position of the severing location between the supporting plate and the inlet a part of the web always remains carried on the supporting plate, also after the web is severed.

According to one implementation a knife with a cutting edge hits and severs the web for severing the web. In a further implementation the knife hits an anvil or a further cutting edge when the web is positioned between the cutting edge and the anvil or the further cutting edge. It is also possible that the web is pressed against a stationary cutting edge. A moveable opposing element biases the web against a stationary cutting edge.

In both implementations with the knife and the anvil the severing device comprises a moveable severing element and an opposing severing element. For severing the web the moveable severing element is moved towards the opposing severing element and hits it. In one implementation the moveable severing element comprises the cutting edge and the opposing severing element comprises the anvil or the further cutting edge. In a further implementation the moveable severing element comprises the anvil and the opposing severing element comprises the cutting edge. In this further implementation the severing device comprises a stationary cutting edge. It is also possible that the web is clamped between two severing device elements and is torn without being cut.

Preferably the web is tensioned after being injected into the bale forming chamber, in particular for being severed. The knife penetrates the tensioned web.

In one implementation the injected web is tensioned by the supporting plate and preferably the downholder unit on the one side and by the bale forming means and the rotated bale on the other side. After the web is injected into the wrapping material inlet, the supporting plate is preferably moved away from the wrapping material inlet into a parking position, thereby tensioning the web.

By severing the web at the severing location a new leading segment is formed which begins at the severing location. This leading segment is preferably slack after the severing step is completed. The new leading segment rests on the supporting plate and is moved towards the wrapping material inlet if a further bale is to be wrapped in the bale forming chamber. It is possible that the leading segment protrudes from the supporting plate. The new leading segment remains slack until it is inserted into the bale forming chamber.

As the severing location is preferably positioned between the supporting plate and the wrapping material inlet, a segment of the web extends from the severing location to the supporting plate being in the parking position after severing the web. The distance between the severing location and the supporting plate in the moment of severing the web is so large that the following effect occurs: After severing the web a web segment protrudes from the supporting plate in a direction towards the wrapping material inlet. After the web is severed, the web moving member can afterwards move the protruding web segment into the wrapping material inlet such that the moved web moving member does not hit a further baler part, even not in the adjacent position. For wrapping the next bale in the bale forming chamber this protruding segment is injected through the wrapping material inlet into the bale forming chamber. The web moving member can remain in a distance to the wrapping material inlet.

In one embodiment this moveable severing element is mechanically connected with the web providing device, i.e. is connected with the web moving member or with the guiding member or with both members.

Preferably the web moving member can be moved towards the and away from the wrapping material inlet. In one implementation of the severing element coupled with the web moving member a movement of the web moving member away from the wrapping material inlet is coupled with a movement of the moveable severing element towards the web of wrapping material. This implementation saves an own drive for the moveable severing element.

The web is first injected and afterwards severed. Preferably the web moving member is moved away from the wrapping material inlet after the web has been injected. In one implementation the movement of the web moving member away from the wrapping material inlet causes the moveable severing element to penetrate the tensioned web or to hit the opposing severing element and thereby to sever the web. In a further implementation a biasing element, e.g. a spring or an electric motor, moves the moveable severing element over a short distance after the web moving member is moved away from the wrapping material inlet. It is also possible that the moveable severing element is moved independently from the web moving member.

Preferably the moveable severing element starts its movement towards the opposing severing member and thereby towards the web when the web moving member has reached a defined position, e.g. a remote position with the maximal distance to the wrapping material inlet. This embodiment ensures that the moveable severing element is always in the same position with respect to the wrapping material inlet when severing the web.

In an alternative embodiment the moveable severing element can be moved independently from the web moving member. This alternative embodiment enables moving the supporting plate away from the wrapping material inlet and back into the parking position at any desired time point after the web is inserted, e.g. as early as possible.

In one embodiment already mentioned a guiding member actuator moves the web moving member towards the and away from the wrapping material inlet, e.g. by shifting or pivoting or folding the parallelogram guider. In a further embodiment a moving member actuator moves the web moving member, e.g. by pulling or pushing the supporting plate.

In one implementation the guiding member actuator also moves the moveable severing element. In a further implementation a specific severing actuator, e.g. a mechanical or hydraulic spring, moves the moveable severing element of the severing device. Preferably these two actuators operate in a sequential manner and can be controlled independently from each other. First the web moving member moved away from the wrapping material inlet reaches a defined position. Afterwards the severing actuator moves the moveable severing element.

Loose material and debris can drop onto the supporting plate and may form an obstacle for injecting the web into the bale forming chamber. One solution is that the web moving member with the supporting plate is positioned in a parking position sufficiently far away from the wrapping material inlet while a bale is formed in the bale forming chamber and before the wrapping procedure starts. The path along which the web moving member is moved is sufficiently long such that the leading segment resting on the supporting plate can reach the wrapping material inlet and remains slack. The distance is so large that the leading segment can be moved towards the wrapping material inlet without tensioning the web and without pulling further wrapping material from a reservoir.

In one embodiment the supporting plate remains below the web after the web is inserted into the bale forming chamber and while the inserted web is pulled into the bale forming chamber. The effect: The pulled web moves over the supporting plate and removes debris from the supporting plate.

The following embodiment can be combined with this long distance and copes with this problem by further increasing the distance.

In this embodiment the web providing device comprises a providing device frame. The providing device frame carries the guiding member. The web moving member is carried by the guiding member or directly by the providing device frame. For guiding the web moving member the guiding member can be pivoted or otherwise moved with respect to this providing device frame. In addition the providing device frame together with the guiding member and thereby also with the web moving member can be pivoted away from the and towards the wrapping material inlet. By moving the providing device frame the guiding member and the web moving member can be pivoted away from the wrapping material inlet while a bale is formed and the wrapping arrangement is not used. The enlarged distance between the web moving member and the wrapping material inlet provides a sufficiently long slack segment of the web. Therefore the leading segment on the supporting plate remains slack during the entire movement of the web moving member. The enlarged distance further reduces the risk that loose material or debris causes a jam or a further malfunction. In particular the risk is reduced that loose material drops onto the web of wrapping material and causes a blockade. For wrapping a bale in the bale forming chamber, the providing device frame is preferably pivoted towards the wrapping material inlet.

In one implementation the providing device frame is pivoted towards the wrapping material inlet and afterwards the web moving member moves the leading segment. In a further implementation the pivoting of the providing device frame and the movement of the web moving member are performed timely overlapping or even simultaneously.

According to the invention at least one surface of the bale is wrapped while the bale is in the bale forming chamber and inserting the web. In the case of a round-cylindrical bale this surface is preferably the entire circumferential surface of the bale. The front faces of the bale are not wrapped.

In one embodiment the bale forming chamber is substantially drum-shaped. The bale to be wrapped in the bale forming chamber is round-cylindrical. This bale in the bale forming chamber is rotated by the bale forming means around a rotating axis which is parallel to the center axis of the bale forming chamber. At least one bale forming member of the bale forming means is driven and further bale forming members are moveable. The web of wrapping material is injected into a space between the or one driven bale forming member and the rotated bale and is clamped by them. This embodiment enables that the web being injected into the bale forming chamber is clamped between the moved bale forming members and the circumferential surface of the rotated bale. The injected web is conveyed by the bale forming members while being clamped.

The bale forming means can comprise at least one driven pressing belt, preferably several parallel driven pressing belts or driven chains, wherein the or every pressing belt surrounds a major part of the drum-shaped bale forming chamber. The bale forming means can also comprise several driven pressing rollers positioned around the bale forming chamber. In one embodiment the bale forming means comprises two driven starter roller which form the two borders of a loose material inlet into the bale forming chamber.

The bale forming and wrapping apparatus can comprise two inlets which guide into the bale forming chamber and which are spaced apart from each other:
- a loose material inlet and
- the wrapping material inlet.

Loose material to be pressed is injected through the loose material inlet into the bale forming chamber. In an alternative embodiment the same inlet serves as the loose material inlet as well as the wrapping material inlet.

In one embodiment the bale forming and wrapping apparatus comprises two wrapping material inlets. This embodiment makes it possible to selectively inject a first kind or a second kind of wrapping material into the bale forming chamber. The embodiment makes it further possible to wrap one surface of the bale simultaneously into two webs. In one implementation this apparatus comprises two wrapping material reservoirs and two web moving members with two supporting plates for the two wrapping material inlets.

The web of wrapping material can be a net or a set of twine strands which stabilizes the form of the bale or can be a plastic sheet which is impermeable for air and/or water. It is also possible that several kinds of wrapping material are moved and are injected, e.g. simultaneously or one after the other and are placed around the same bale.

The web providing device according to the invention can be used for different kinds of wrapping material, in particular for a plastic sheet, a net, or an ensemble with several strands of twine.

In one implementation the bale forming and wrapping apparatus comprises two web providing devices, e.g. two devices for two different kinds of wrapping material. These two web providing devices can be assigned to the same wrapping material inlet or can be assigned to two different wrapping material inlets. At least one web providing device is implemented according to the invention.

The invention can be used on a vehicle comprising the bale forming and wrapping apparatus, e.g. on board of an agricultural harvester or a vehicle collecting waste from the ground. This vehicle moves over ground and picks up loose material from the ground. The vehicle can be self-propelled or pulled by a further vehicle. The picked-up loose material is conveyed into the bale forming chamber. The invention can also be used on a stationary plant, e.g. a plant for pressing and wrapping bales from paper, cartridges, waste or recycling material.

These and other aspects of the invention and of the preferred embodiment will be even more apparent from the detailed embodiment as described below and will be elucidated in detail there.

### BRIEF DESCRIPTION OF THE DRAWINGS

Fig. 1 shows schematically a web providing device according to the prior art and a usual bale forming means;
Fig. 2 shows schematically the web providing device according to the invention and the usual bale forming means of Fig. 1;
Fig. 3 shows the web moving member of the device of Fig. 2 in the remote position and operating in a parking mode after the severing device has severed the web for the previous bale;
Fig. 4 shows the web moving member of Fig. 3 in the adjacent position and operating in a feeding mode;
Fig. 5 shows the web moving member of Fig. 3 again in the remote position and operating in a tensioning mode after the bale forming means and the rotating bale have grasped the inserted web and while the web is pulled from the supply reel;
Fig. 6 shows the web moving member of Fig. 3 in the remote position of Fig. 5 after the severing member has severed the web;
Fig. 7 shows in a side view an alternative implementation with a piston-cylinder device for moving the supporting plate;
Fig. 8 shows in a side view a further alternative implementation with a sprocket wheel for moving the supporting plate;
Fig. 9 shows in a front view the further alternative implementation of Fig. 8.

### DETAILED DESCRIPTION OF EMBODIMENT

Fig. 1 shows schematically a bale forming and wrapping apparatus according to the prior art. Fig. 2 shows a bale forming and wrapping apparatus in which the invention is implemented. Both balers have the same exemplary bale forming means. Coinciding parts have the same reference signs.

The bale forming and wrapping apparatus (baler) of Fig. 1 as well as that of Fig. 2 is implemented as a vehicle and is pulled by a tractor (not shown) or other agricultural harvester over ground in a travelling direction TD (in Fig. 1 and Fig. 2 from right to left). The baler
- picks up loose crop material (hay, straw, grass, e.g.) from the ground,
- conveys the picked-up crop material through a feeding channel in a direction opposite to the travelling direction TD,
- optionally cuts the crop material while it is conveyed through the feeding channel,
- presses the conveyed crop material through the feeding channel and a crop material inlet into a drum-shaped bale forming chamber,
- rotates the injected crop material around a rotating axis which is perpendicular to the drawing planes of Fig. 1 and Fig. 2,
- forms under pressure from the injected and rotated crop material in the bale forming chamber a round-cylindrical bale,
- wraps in the bale forming chamber the circumferential surface of the formed round-cylindrical bale into a given number of layers of wrapping material (a net or strands of twine or plastic sheet), and
- ejects the wrapped bale out of the bale forming chamber.

The baler of Fig. 1 and that of Fig. 2 both comprise the following parts:
- a pick-up unit (not shown),
- a casing for the bale forming chamber wherein the casing comprises a stationary front housing and a pivotal tailgate (discharge gate, not shown),
- a conveyor rotor 39 with several rigid tines,
- a driven lower starter roller 42,
- a driven upper starter roller 6 mounted on a shaft 18 and comprising a conveying surface 8,
- at least one, preferably several parallel driven pressing belts 40 surrounding a bale forming chamber,
- two deflecting rollers 41.1, 41.2 and further deflecting rollers (not shown) which deflect the pressing belts 40,
- a guiding roller 44 and further guiding rollers (not shown) for guiding the pressing belts 40, and
- a wrapping apparatus 29 serving as the web providing device.

The conveyor rotor 39 is rotated anti-clockwise, engages from above into the feeding channel, and conveys the picked-up crop material towards the bale forming chamber. The upper starter roller 6 and the lower starter roller 42 contact the injected crop material and form the two borders of a crop material inlet 43 which guides into the bale forming chamber. Several longitudinal ribs are mounted on the circumferential surface 8 of the upper starter roller 6 and belong to the conveying surface 8. The rollers 41.2, 44 are rotatably mounted at the pivotal tailgate. The driven starter rollers 42, 6 and the further rollers 41.1, 18 are rotatably mounted at the stationary front housing. The pressing belts 40 and the starter rollers 6, 42 surround the bale forming chamber in which a bale B is created.

Fig. 1 and Fig. 2 show the rotating directions of the rollers 6, 42, 41.1, the conveying direction of the pressing belts 40, and the direction in which the bale B is rotated. The starter rollers 6, 42 are driven around rotating axes perpendicular to the drawing planes of Fig. 1 and Fig. 2. The upper starter roller 6 is mounted on the drive shaft 18 (perpendicular to the drawing plane). The drive shaft of the lower starter roller 42 is not shown.

In the embodiment of Fig. 1 and Fig. 2 the wrapping device 29 is mounted at a front plate of the stationary front housing, i.e. in front of the bale forming chamber - seen in the travelling direction TD. It is also possible that the wrapping device 29 is mounted at the pivotal tailgate. Fig. 1 shows the following parts of the wrapping device 29 according to the prior art:
- a rotatable supply reel 32 of wrapping material kept between two lateral shaft stubs which form an unrolling station for the web,
- a driven pulling roller 17 and an idler pulling roller 16,
- a sagging loose end 31 forming a leading segment of the web 30,
- a stationary or pivotal guiding sheet 33 which is angularly orientated,
- a driven web feeding roller 36 with a conveying surface 37, and
- a knife 5 and an anvil 19 of a severing device (to be explained below).

A web 30 of wrapping material can be pulled from the supply reel 32. In the embodiment of Fig. 1 the idler pulling roller 16 has a smooth surface and is biased against the driven pulling roller 17. The driven pulling roller 17 has a circumferential surface made of rubber. The two pulling rollers 16, 17 are arranged to clamp and convey the web 30 of wrapping material and pull the clamped web 30 from the supply reel 32. The web feeding roller 36 is mounted on the drive shaft 34 and can shift the web 30 towards the wrapping material inlet 15. Several longitudinal ribs are mounted on the conveying surface 37 of the web feeding roller 36.

The respective rotating axes of the supply reel 32, of the pulling rollers 16, 17, of the web feeding roller 34, of the starter rollers 6, 42, of the deflecting rollers 41.1, 41.2, of the guiding roller 44, and of the web feeding roller 36 are parallel to the ground and are perpendicular to the travelling direction TD and to the drawing plane of Fig. 1.

As already mentioned, crop material is conveyed by the conveyor rotor 39 towards the crop material inlet 43 and is injected through the crop material inlet 43 into the provided drum-shaped bale forming chamber. An increasing round-cylindrical bale B is formed under pressure in the bale forming chamber which is surrounded by the pressing belt 40 and by the two starter rollers 6, 42. The bale B is rotated anti-clockwise around an axis perpendicular to the drawing plane of Fig. 1.

As soon as the bale B has reached a given diameter, the wrapping process is started. The driven pulling roller 17 starts to rotate. The idler pulling roller 16 is pressed by a biasing member, e.g. by a spring, against the driven roller 17. The two pulling rollers 16, 17 clamp and pull a web 30 of increasing length from the supply reel 32. An increasing loose portion 31 is formed downstream from the pulling rollers 16, 17. The sagging loose portion 31 increases and drops onto the sloping guiding sheet 33. The guiding sheet 33 can be stationary or pivotal. The guiding sheet 33 guides the increasing sagging loose portion 31 towards the conveying surface 37 of the web feeding roller 36. The conveying surface 37 of the rotated web feeding roller 36 further conveys the sagging and guided loose portion 31 towards the conveying surface 8 of the upper starter roller 6. The conveying surface 8 further conveys the loose portion 31 of the web 30 towards and through the inlet 15 for wrapping material. This wrapping material inlet 15 is formed between the upper starter roller 6 and the segment of the pressing belts 40 deflected by the deflecting roller 41.1. A distance between the wrapping material inlet 15 and the web feeding roller 36 occurs.

The leading portion 31 is injected through the inlet 15into the bale forming chamber and is clamped and grasped between the upper starter roller 6 and the rotated bale B. After having grasped the web 30, the starter roller 6 with the conveying surface 8 and the bale B together clamp the web 30 and pull the web 30 from the supply reel 32. After being injected, the web 30 is further conveyed along the crop material inlet 43 and along the lower starter roller 42 and is afterwards clamped between the bale B and the pressing belts 40.

After the leading edge of the web 30 has reached the bale forming chamber, the driven pulling roller 17 is switched into an idler mode. The pulled web 30 rotates the pulling rollers 16, 17 still clamping the web 30. After the web 30 is injected and securely clamped, the wrapping material supply reel 32 is decelerated by a braking assembly (not shown). Thereby the web 30 is tensioned.

After a required number of layers of tensioned wrapping material are placed around the circumferential surface of the bale B in the bale forming chamber, the web 30 is severed at a severing location 50 which is positioned between the pulling rollers 16, 17 and the guiding sheet 33. For severing the web 30, the knife 5 is moved in a horizontal direction towards and against the anvil 19 and penetrates the web 30. The tailgate is opened. The wrapped bale B is ejected out of the bale forming chamber. The tailgate is closed again. A new leading portion 31 of the web 30 extends from the pulling rollers 16, 17 to the severing location 50 defined by the severing device parts 5 and 19.

The balers of Fig. 1 and Fig. 2 comprise several parts in common. These coinciding parts have the same reference signs. The baler of Fig. 2 also moves the web 30 towards the wrapping material inlet 15 and also injects the moved web 30 into the bale forming chamber. The baler of Fig. 2 moves and guides the web towards the wrapping material inlet 15 in an alternative way.

It is possible to combine the invention with the pulling rollers 16, 17 and/or with the guiding sheet 33 and/or with the web feeding roller 36. But in contrast to the baler according to Fig. 1 the baler according to the embodiment of the invention as shown in Fig. 2 does neither comprise the two pressing roller 16, 17 nor the sloping guiding sheet 33 nor the web feeding roller 36. Thanks to the invention no one of these parts is necessary.

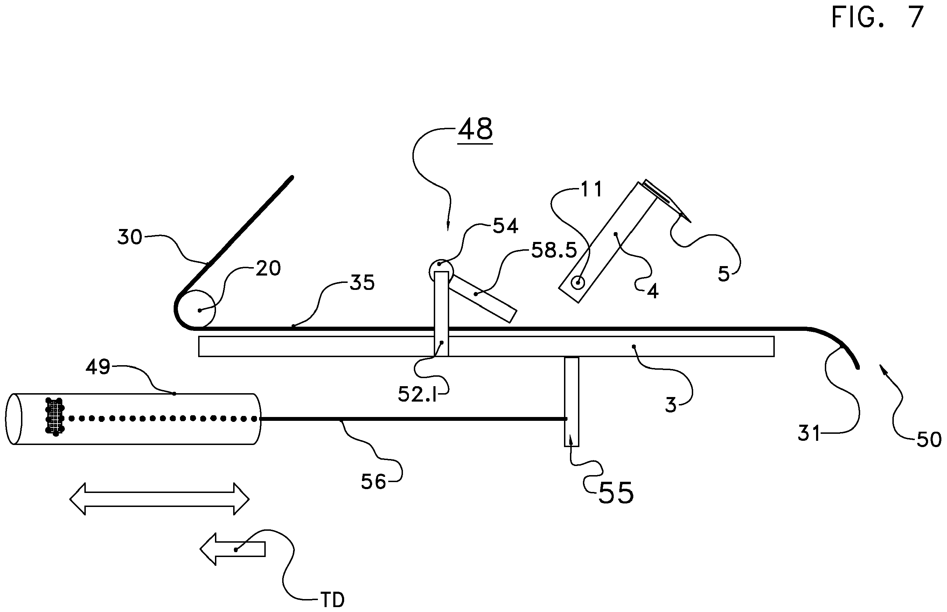

The baler of Fig. 2 has the following additional parts:
- a moveable supporting plate 3,
- a downholder unit 48 connected with and positioned above the supporting plate 3, preferably implemented as an ensemble of pivotal flaps mounted at a traversal rod 54 (Fig. 7 to Fig. 9),
- two stationary web deflecting rollers 14, 21, and
- a moveable web deflecting roller 20 connected with the moveable supporting plate 3.

The term "stationary" means: The rollers 14 and 21 can rotate around their respective center axes but cannot be shifted laterally. The rollers 14 and 21 are idler rollers.

In one implementation the stationary roller 14 serves as a spreader roller which spreads the moved web of wrapping material. Thanks to the spreader roller 14 it is ensured that the entire width of the circumferential surface of the bale B in the bale forming chamber is wrapped.

In one implementation the number of revolutions of the deflecting roller 14 or 21 is counted. The counted number serves as a value indicative of the length of the web pulled from the supply reel 32. In one implementation a freewheel clutch inhibits that the roller 14 or the roller 21 can be rotated backwards. Thereby the undesired event is inhibited that the guided and deflected web 30 moves backwards.

Fig. 2 shows the supporting plate 3 in a remote parking position in which the supporting plate 3 has the maximal distance to the wrapping material inlet 15. The supporting plate 3 can be moved in both directions as indicated by the double arrow (to be described below). When being moved, the supporting plate 3 preferably keeps its horizontal orientation. The web deflecting roller 20 is moved together with the supporting plate 3 and can rotate around its own rotating axis but cannot otherwise be moved with respect to the supporting plate 3.

In addition the knife 5 of the baler of Fig. 2 is moved in a vertical direction towards the anvil 19 for severing the web 30 after the bale B is wrapped. The severing location 50 is arranged between the supporting plate 3 being in the parking position and the wrapping material inlet 15. The embodiment of Fig. 2 can also be implemented with a severing device wherein the moveable severing part 5 operates in a horizontal or sloping direction.

The web 30 is guided around the deflecting rollers 14, 21, and 20. The severing device 5, 19 is arranged downstream from the supporting plate 3 and downstream from the downholder unit 48, i.e. it severs the web 30 at a severing location 50 positioned between the supporting plate 3 being in the parking position and the wrapping material inlet 15.

As can be seen in Fig. 2, a slack loose portion 31 extends from the front edge of the web 30 (at the severing location 50) backwards to the supporting plate 3. A slack leading segment 35 rests on the supporting plate 3 and is kept by the downholder unit 48 on the supporting plate 3. In the embodiment this leading segment 35 extends from the leading edge of the web 30 to the deflecting roller 20, i.e. comprises the leading loose leading portion 31. The leading portion 35 protrudes from the supporting plate 3. The supporting plate 3 contacts the leading segment 35 from below in a substantially rectangle contact area. This contact area has a width equal to the web width and a length in the moving direction.

Fig. 3 to Fig. 6 show a cross-sectional view onto one embodiment of the bale forming and wrapping apparatus of Fig. 2 in a vertical plane positioned in the middle of the bale forming and wrapping apparatus and extending in the travelling direction TD.

Fig. 3 shows the supporting plate 3 positioned in the largest possible distance to the wrapping material inlet 15 (remote parking position). This remote parking position is achieved after the web 30 for the previous bale has been injected into the bale forming chamber. The severing device 5, 19 has severed the web 30 at the severing location 50. This remote position is taken while or after the previous bale has been wrapped into injected web and while the current bale is formed in the bale forming chamber and until a given wrapping start condition is fulfilled, e.g. the bale diameter reaches a given threshold. Thanks to the remote parking position sufficient space for providing the slack leading segment 35 during the entire movement towards the wrapping material inlet 15 is provided. The leading segment 35 remains slack during the entire movement. In addition the remote position provides a gap through which debris can pass between the leading segment 35 on the supporting plate 3 and the wrapping material inlet 15 and can drop onto the conveyor rotor 39.

The supporting plate 3, the downholder unit 48, the tube 54, and the moveable web deflecting roller 20 belong to the web moving member of the embodiment. The leading segment 35 of the web 30 rests on the supporting plate 3, is kept by the downholder unit 48, and remains slack while the current bale B is formed in the bale forming chamber and while the wrapping device 29 is not used. The downholder unit 48 above the supporting plate 3prevents a movement of the leading segment 35 with respect to the supporting plate 3 - also while the supporting plate 3 is moved (see below). The loose leading portion 31 of the leading segment 35 comprises the leading edge 46 of the web 30 and protrudes from the supporting plate 3. In the embodiment of Fig. 3 to Fig. 6 the slack leading segment 35 starts in the web deflecting roller 20, extends to the leading edge 46, and rests on the supporting plate 3.

In one implementation the entire web segment downstream from the deflecting spreader roller 14 to the leading edge 46 remains slack when the web moving member is in the situation shown in Fig. 3, Fig. 5 and Fig. 6, i.e. in every position of the web moving member as long as the web is not injected.

In a further implementation the web segment between the rollers 20 and 21 is tensioned when the web moving member 3, 20 is in the remote parking position (Fig. 3) and becomes slack while the web moving member 3, 20 moves towards the wrapping material inlet 15. This effect is achieved as the distance between the rollers 20 and 21 decreases due to the guided movement of the web moving member 3, 20. In this further implementation the slack state is achieved on the final part of the path of web movement towards the wrapping material inlet 15.

In the embodiment of Fig. 3 to Fig. 6 the supporting plate 3 is connected with a frame 1 (the providing device frame) of the wrapping apparatus 29 by means of a parallelogram guider. This parallelogram guider comprises the following parts:
- a front guiding lever member 2.1 with a right guiding front lever arm and a corresponding left front guiding lever arm,
- a rear guiding lever member 2.2 with a right rear guiding lever arm and a corresponding left rear guiding lever arm, and
- a bearing member 2.3 for the supporting plate 3 with a right bearing and a corresponding left bearing.

The terms "front" and "rear" refer to the travelling direction (in Fig. 3 to Fig. 8 from right to left).

The supporting plate 3 is carried by the bearing member 2.3 and is positioned between the two bearings. The slack leading segment 35 of the web 30 rests on the supporting plate 3 and extends substantially from the left bearing to the right bearing of the bearing member 2.3. The downholder unit 48 keeps the leading segment 35 on the supporting plate 3.

Fig. 3 further shows a moveable knife 5 with a cutting edge 51 extending perpendicular to the drawing plane. This knife 5 extends over the entire width of the web 30 and is mounted at the free end of a pivotal knife lever member 4 comprising a right knife lever arm and a corresponding left knife lever arm (not shown). The knife 5 extends from lever arm to lever arm. The knife lever member 4 is pivotally connected with the rear guiding lever member 2.2 in a pivoting axle 11 which also extends perpendicular to the drawing plane of Fig. 3.

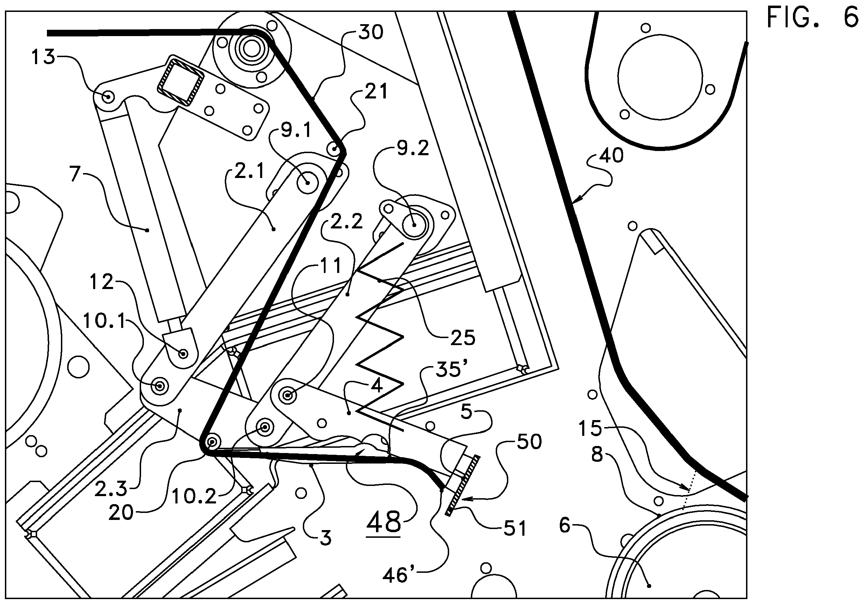

A locking mechanism (not shown) locks the knife lever member 4 in a fixed pivotal position with respect to the rear guiding lever member 2.2. This fixed pivotal position is shown in Fig. 3 to Fig. 5. In addition the locking mechanism can release the knife lever member 4 such that an actuator can pivot the knife lever member 4 towards the web 30, cf. Fig. 6. In one implementation at least one helical spring 25 tends to extend. When being extended, the spring 25 pivots the knife lever member 4 around the axle 11 towards and against the web 30, cf. Fig. 6. A further actuator, e.g. an electric or hydraulic motor, can move the knife lever member 4 against the force of the spring 25 back into the parking position.

The front lever arms of the front guiding lever member 2.1 are pivotally connected with the wrapping device frame 1 in a front pivoting axle 9.1. The rear lever arms of the rear guiding lever member 2.2 are pivotally connected with the wrapping device frame 1 in a rear pivoting axle 9.2. A distance between these parallel pivoting axles 9.1, 9.2 occurs. The pivoting axles 9.1, 9.2 are not shifted laterally while the web moving member 3, 20 is moved out of the remote parking position towards the wrapping material inlet 15. The bearing member 2.3 is pivotally connected with the front guiding member 2.1 in a front pivoting axle 10.1 and with the rear guiding member 2.2 in a rear pivoting axle 10.2. A distance between the pivoting axles 10.1, 10.2 occurs.

Fig. 3 further shows
- a guiding member actuator 7 for the parallelogram guider 2.1, 2.2, 2.3,
- the moveable web deflecting element 20 (in the embodiment: a deflecting roller) which deflects the web 30 and which is rotatably mounted at the bearing member 2.3 and extends from the left bearing to the right bearing of the bearing member 2.3, and
- the two stationary web deflecting rollers 14, 21 for the web 30.

The parallelogram guider 2.1, 2.2, 2.3 belongs to the guiding member of the embodiment. The supporting plate 3, the downholder unit 48, and the web deflecting roller 20 belong to the web moving member.

In one implementation the guiding member actuator 7 comprises a right piston-cylinder device and a corresponding left piston-cylinder device (not shown). It is also possible that the guiding member actuator 7 comprises only one piston-cylinder device, an electric motor, or a further actuator. The guiding member actuator 7 is pivotally connected with the front guiding lever member 2.1 in a lower pivoting axle 12 and with the frame 1 in an upper pivoting axle 13.

The actuator can be a double-acting actuator which can move the web moving member 3, 20, 48 in both directions. In one implementation the web moving member 3, 20, 48 is locked in the parking position. It is also possible that a biasing member tends to move the web moving member 3, 20, 48 into the parking position. A single-acting actuator moves the web moving member 3, 20, 48 towards the wrapping material inlet 15 against the force of the biasing member.

Fig. 3 also shows a part of the upper starter roller 6 with the conveying surface 8 mounted on the drive shaft 18.

Fig. 3 to Fig. 6 illustrate the operation of the wrapping apparatus 29. After the previous bale has been wrapped and the severing device 5, 19 has severed the web 30, the piston-cylinder devices of the guiding member actuator 7 are or remain retracted and keep the web moving member 3, 20 in the remote parking position (maximal distance to the wrapping material inlet 15). The web 30 is kept by the downholder unit 48 on the supporting plate 3. No relative movement between the web 30 and the moved supporting plate 3 occurs. The web 30 is guided around the deflecting rollers 14, 21 and the web deflecting roller 20. The segment 35 from the roller 20 to the leading edge 46 is slack. Fig. 3 shows this situation.

The web moving member 3, 20, 48 is moved towards the wrapping material inlet 15. In one implementation the web segment from the stationary roller 21 to the leading edge 46 is so long that no web 30 needs to be pulled from the supply reel 32 while the supporting plate 3 moves the leading segment 35 towards the wrapping material inlet 15. The part of the web 30 upstream from the roller 21 remains not conveyed until the leading segment 35 is injected into the bale forming chamber. The web segment between the rollers 21 and 20 is only rotated around a rotating axis through the roller 21 and perpendicular to the drawing plane of Fig. 2 to Fig. 6 but is not conveyed. Wrapping material is only pulled from the supply reel 32 after the web 30 is injected and while the inserted web 30 is first clamped and pulled between the starter roller 6 and the rotated bale B and later additionally between the pressing belts 40 and the rotated bale B.

Fig. 4 shows a situation shortly after the wrapping procedure has started. The piston-cylinder device(s) of the guiding member actuator 7 are expanded and have pivoted the parallelogram guider 2.1, 2.2, 2.3 around the axes 9.1, 9.2 towards the wrapping material inlet 15 (direction of arrow M). The web moving member 3, 20, 48 is moved towards the wrapping material inlet 15 without being tilted or pivoted. During the guided movement the upper surface of the supporting plate 3 remains in a horizontal position. The conveying surface 8 with the ribs has conveyed the leading segment 35 further towards the wrapping material inlet 15.

In one implementation the knife lever member 4 is linked with the parallelogram guider 2.1, 2.2, 2.3. Pivoting the parallelogram guider 2.1, 2.2, 2.3 towards the wrapping material inlet 15 makes the pivotal knife lever member 4 to pivot around the pivoting axis 10.2 away from the wrapping material inlet 15. The knife lever member 4 is locked and therefore not pivoted with respect to the rear guiding lever member 2.2.

In a further embodiment (not shown) the knife lever member 4 is not linked with the parallelogram guider 2.1, 2.2, 2.3 but can be moved independently from the parallelogram guider 2.1, 2.2, 2.3 by an own actuator.

In the situation shown in Fig. 4 the front edge of the supporting plate 3 engages into the wrapping material inlet 15. The inserted web 30 has just been clamped between the rotated bale B and the surface 8 of the upper starter roller 6. The web 30 will now be tensioned. The web segment between the roller 21 and the leading edge 46 is so long and the remote parking position is selected such that the web 30 is not moved with respect to the rollers 14, 21, 20 while the supporting plate 3 moves the leading segment 31 towards the wrapping material inlet 15 (transition from Fig. 3 to Fig. 4). The web 30 is only pulled from the supply reel 32 and moved and tensioned when the upper starter roller 6 and the rotated bale B have clamped the injected web 30.

Fig. 5 shows the continuation of the wrapping procedure for this bale. After the conveying surface 8 and the rotated bale B have securely grasped and clamped the web 30 and pull the web 30 from the supply reel 32, the piston-cylinder device(s) of the guiding member actuator 7 are retracted again and shift the web moving member 3, 20, 48 back in the remote position - or in an intermediate position. The injected part of the web 30 remains clamped by the conveying surface 8 and later by the belts 40 on the one side and the rotated bale B on the other side. The web part outside of the bale forming chamber remains guided around the web deflecting roller 20 connected with the supporting plate 3 and the rollers 14, 21. Therefore that segment of the web 30 which extends from the roller 20 to the wrapping material inlet 15 is now tensioned by the roller 20 on the one side and the rotated bale B and the bale forming means on the other side. This tensioning improves the wrapping procedure and ensures that the inserted web 30 covers the entire circumferential surface of the bale B without wrinkles. When the web moving member 3, 20, 48 is moved back into the parking position, the knife lever member 4 is pivoted back towards the wrapping material inlet 15 and towards the web 30. As the injected web 30 is clamped, the further segment of the web 30 is pulled from the supply reel 32.

Fig. 6 shows the termination of the wrapping procedure. The locking mechanism for the knife lever member 4 is released. A severing device actuator, e.g. the helical spring 25 or a spring or an electric motor, has further pivoted the knife lever member 4 carrying the knife 5 around the pivoting axle 11 towards and through the web 30. The web 30 is severed at the severing position 50 between the knife 5 and the anvil 19 (not shown in Fig. 3 to Fig. 6).

In an alternative implementation the tension of the web 30 is so high that the knife 5 can penetrate and sever the web 30 without hitting an anvil 19. Or the clamped web 30 is torn.

In every implementation of severing the web 30a new slack leading segment 35' with a new leading edge 46' is formed and rests on the supporting plate 3, cf. Fig. 6. The new leading edge 46' is positioned at the knife 5. The procedure as just described will be performed again for the new bale.

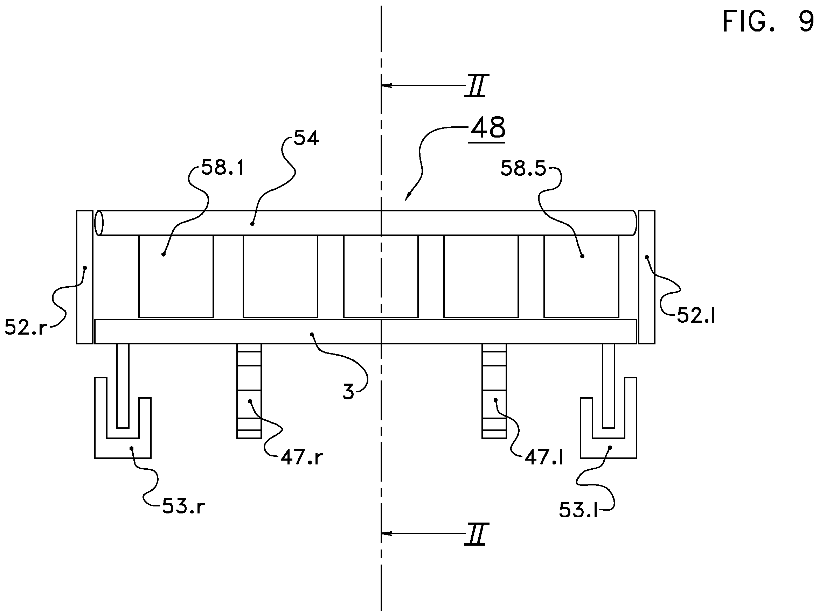

Fig. 7 to Fig. 9 show two alternative implementations of the actuator for the web moving member 3, 20, 48 and for the guiding member. Fig. 7 and Fig. 8 show these alternative implementations in a side view and Fig. 9 the second one in a front view. As can best be seen in Fig. 7 to Fig. 9, the downholder unit 48 of the embodiment comprises several flaps 58.1, 58.2, ... which are mounted above the supporting plate 3. The flaps 58.1, 58.2, ... are mounted at a traversal tube 54. The tube 54 is rigidly connected with the supporting plate 3 via a left mechanical coupling element 52.1 and a right mechanical coupling element 52.r.

These flaps 58.1, 58.2, ... can only pivot but cannot be shifted with respect to the supporting plate 3. The force of gravity of the flaps 58.1, 58.2, ... and possibly the friction between the flaps 58.1, 58.2, ... and the web 30 keeps the leading segment 35 on the supporting plate 3. In this implementation the flaps 58.1, 58.2, ... are only rotated by the force of gravity and not by an actuator. It is also possible that a biasing member, e.g. helical springs or a hydraulic or electric actuator (not shown), tends to pivot the flaps 58.1, 58.2, ... against the supporting plate 3.

It is possible that the flaps 58.1, 58.2, ... can be pivoted away from the supporting plate 3 such that a new web 30 can be inserted between the supporting plate 3 and the tube 54 after an empty supply reel 52 has been replaced with a new one. During operation it is possible but not necessary to pivot the flaps 58.1, 58.2 away from the supporting plate 3.

In both implementations the supporting plate 3 is guided by means of a suitable guiding member, e.g. by two lateral guiding rails below the supporting plate 3 (shown in Fig. 9, can also be used for the first embodiment) and/or by two rails adjacent to the plate's lateral edges. This guiding member restricts the possible movements of the supporting plate 3 to opposite linear movements towards the and away from the wrapping material inlet 15 and inhibits lateral or vertical movements. The guiding member 2.1, 2.2, 2.3 is saved.

In the implementation of Fig. 7 a hydraulic piston-cylinder device 49 is positioned below the supporting plate 3 and moves the guided supporting plate 3 towards the wrapping material inlet 15 in a controlled manner. In one implementation the piston-cylinder device 49 is double-acting and moves the supporting plate 3 back from the wrapping material inlet 15. In a further implementation a retaining member, e.g. a spring, tends to move the supporting plate 3 away from the wrapping material inlet 15. The piston-cylinder device 49 moves the supporting plate 3 towards the wrapping material inlet 15 against the retaining force applied by the retaining member.

Fig. 8 shows a further alternative implementation. Two sprocket wheels 47.1, 47.r below the supporting plate 3 engage into corresponding teeth (not shown) at the lower surface of the supporting plate 3. The sprocket wheels 47.1, 47.r are rotated by a common shaft (not shown) and shift the supporting plate 3 towards the and away from the wrapping material inlet 15.

Fig. 9 shows the second alternative embodiment of the web moving member 3, 20, 48 in a viewing direction parallel to the moving direction of the supporting plate 3. The side views of Fig. 2 to Fig. 8 show the baler in the plane II - II of Fig. 9. The travelling direction TD points to the observer. Fig. 9 shows the following parts:
- five parallel pivotal flaps 58.1, 58.2, ... mounted at the traversal tube 54,
- a left sprocket wheel 47.1 and a right sprocket wheel 47.r for moving the supporting plate 3,
- a left guiding rail 53.1 and a right guiding rail 53.r,
- a left coupling element 52.1 and a right coupling element 52.r which couple the tube 54 for the downholder flaps 58.1, 58.2, ... with the supporting plate 3.

The terms "left" and "right" refer as usual to the travelling direction TD which is opposite to a movement of the supporting plate 3 towards the wrapping material inlet 15.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | providing device frame of the wrapping device 29 |
| 2.1 | front guiding lever member of the guiding member, comprises two front guiding lever arms, belong to the parallelogram guider for the supporting plate 3 |
| 2.2 | rear guiding lever member of the guiding member, comprises two rear guiding lever arms, belong to the parallelogram guider for the supporting plate 3 |
| 2.3 | bearing member for the supporting plate 3, comprises two lateral bearings, belong to the parallelogram guider for the supporting plate 3 |
| 3 | moveable supporting plate, carries from below the slack leading segment 35 |
| 4 | pivotal knife lever member for the knife 5, comprises two lateral knife lever arms which are connected with the rear guiding lever member 2.2 |
| 5 | knife, mounted between the free ends of the pivotal knife lever arms of the knife lever member 4, belongs to the moveable severing element of the severing device |
| 6 | upper starter roller, delimit the crop material inlet 43 from above |
| 7 | guiding member actuator for moving the parallelogram guider |
| 8 | conveying surface of the starter roller 6 |
| 9.1 | pivoting axle between the wrapping device frame 1 and the front guiding lever member 2.1 |
| 9.2 | pivoting axle between the wrapping device frame 1 and the rear guiding lever member 2.2 |
| 10.1 | pivoting axle between the front guiding lever member 2.1 and the bearing member 2.3 |
| 10.2 | pivoting axle between the rear guiding lever member 2.2 and the bearing member 2.3 |
| 11 | pivoting axle between the rear guiding lever member 2.2 and the knife lever member 4 for the knife 5 |
| 12 | pivoting axle between the guiding member actuator 7 and the front guiding lever member 2.1 |
| 13 | pivoting axle between the guiding member actuator 7 and the wrapping device frame 1 |
| 14 | upper stationary deflecting roller for the web 30, serves as a spreader roller |
| 15 | wrapping material inlet for the web 30 of wrapping material, positioned between the upper starter roller 6 and the deflecting roller 41.1 |
| 16 | idler roller for pulling the web 30 from the supply reel 32, biased against the driven roller 17 |
| 17 | driven roller for pulling the web 30 from the supply reel 32 |
| 18 | driven shaft for the starter roller 6 |
| 19 | anvil, serves as the opposing severing element for the knife 5 |
| 20 | moveable deflecting roller for the web 30, connected with the supporting plate 3, in one implementation mounted between the bearings 2.3 |
| 21 | lower stationary deflecting roller for the web 30, mounted at the wrapping device frame 1 |
| 25 | spring, tends to pivot the knife lever member 4 around the axle 11 towards the web 30 |
| 29 | wrapping device |
| 30 | web of wrapping material |
| 31 | free loose portion of the web 30, belongs to the slack leading segment 35 |
| 32 | supply reel with wrapping material |
| 33 | stationary guide sheet for web 30 |
| 34 | drive shaft for the web feeding roller 36 |
| 35 | slack leading segment of the web 30, rests on the supporting plate 3 |
| 35' | new slack leading segment |
| 36 | web feeding roller |
| 37 | conveying surface of the web feeding roller 36 |
| 39 | conveyor rotor, conveys picked-up crop material through the feeding channel |
| 40 | pressing belt or belts, guided around the deflecting rollers 41.1, 41.2 |
| 41.1, 41.2 | deflecting rollers for the pressing belt(s) 40 |
| 42 | lower starter roller, delimits the crop material inlet 43 from below |
| 43 | crop material inlet, delimited by the starter rollers 6 and 42 |
| 44 | guiding roller for the pressing belt(s) 40 |
| 46 | leading edge of the web 30 |
| 46' | new leading edge of the web 30 |
| 47.l, 47.r | driven sprocket wheel for moving the supporting plate 3 |
| 48 | downholder unit, comprises the tube 54, the flaps 58.1, 58.2, ... pivotally mounted at the tube 54, and the coupling elements 52.l, 52.r |
| 49 | hydraulic piston-cylinder device for moving the supporting plate 3 |
| 50 | severing location of the severing device 4, 5, 19 |
| 51 | cutting edge of the knife 5 |
| 52.l, 52.r | mechanical coupling elements between the supporting plate 3 and the tube 54 of downholder unit 48 |
| 53.l, 53.r | guiding rails for guiding the supporting plate 3 |
| 54 | traversal tube for holding the flaps 58.1, 58.2, ..., rigidly connected with the supporting plate 3 |
| 55 | coupling element for connecting the rod 56 with the supporting plate 3 |
| 56 | rod for connecting the piston of the piston-cylinder device 49 with the coupling element 55 |
| 58.1, 58.2, ... | flaps of the downholder unit 48, pivotally mounted at the tube 54 |
| B | round-cylindrical bale, is formed and wrapped in the bale forming chamber |
| M | direction in which the web moving member 3, 20, 48 is moved when carrying the leading segment 35 |

## Claims

1. Bale forming and wrapping apparatus comprising
- a bale forming means (40, 41.1, 41.2, 42, 44) providing a bale forming chamber and
- a web providing device (29) positioned outside of the bale forming chamber,
wherein the web providing device (29) comprises
- a web moving member (3, 20, 48) arranged to move a web (30) of wrapping material towards a wrapping material inlet (15) which leads into the provided bale forming chamber and
- a guiding member (2.1, 2.2, 2.3, 53.1, 53.r) for the web moving member (3, 20, 48),
wherein the bale forming means (40, 41.1, 41.2, 42, 44) is arranged to form a bale (B) in the provided bale forming chamber,
wherein the guiding member (2.1, 2.2, 2.3, 53.1, 53.r) is arranged to guide the web moving member (3, 20, 48) while the web moving member (3, 20, 48) moves the web (30) towards the wrapping material inlet (15), and
wherein the bale forming and wrapping apparatus is arranged
- to insert the moved web (30) of wrapping material through the wrapping material inlet (15) into the bale forming chamber, and
- to wrap at least one surface of the bale (B) in the bale forming chamber into the inserted web (30) of wrapping material,
**characterized in that**
the web moving member (3, 20, 48) further comprises a supporting plate (3), wherein the supporting plate (3)
- is arranged to support from below a slack leading segment (35) of the web (30) of wrapping material and
- is moveable towards the wrapping material inlet (15),
wherein the web moving member (3, 20, 48) is arranged
- to move the slack leading segment (35) resting on the supporting plate (3) towards the wrapping material inlet (15) and
- to keep the moved leading segment (35) being positioned on the supporting plate (3) in a slack state until the web (30) reaches the wrapping material inlet (15) and
wherein the bale forming and wrapping apparatus is arranged to insert the slack leading segment (35) into the bale forming chamber.

2. Bale forming and wrapping apparatus according to claim 1,
**characterized in that**
the guiding member (2.1, 2.2, 2.3, 53.1, 53.r) is arranged to guide the supporting plate (3) along a substantial linear path
while guiding the web moving member (3, 20, 48) towards the wrapping material inlet (15).

3. Bale forming and wrapping apparatus according to one of the preceding claims,
**characterized in that**
the guiding member (2.1, 2.2, 2.3, 53.l, 53.r) is implemented as a parallelogram guider.

4. Bale forming and wrapping apparatus according to one of the preceding claims,
**characterized in that**
the guiding member (2.1, 2.2, 2.3, 53.1, 53.r) comprises
- a pivotal first lever arm member (2.1),
- a pivotal second lever arm member (2.2), and
- a bearing member (2.3),
wherein the bearing member (2.3) is mechanically connected
- with both lever arm members (2.1, 2.2) and
- with the web moving member (3, 20, 48).

5. Bale forming and wrapping apparatus according to claim 4,
**characterized in that**
the web providing device (29) comprises a guiding member actuator (7),
wherein the guiding member actuator (7) is arranged to pivot the first lever arm member (2.1) towards the wrapping material inlet (15).

6. Bale forming and wrapping apparatus according to claim 4 or claim 5,
**characterized in that**
the second lever arm member (2.2) is positioned between
- the first lever arm member (2.1) and
- the wrapping material inlet (15).

7. Bale forming and wrapping apparatus according to one of the preceding claims,
**characterized in that**
the web providing device (29) comprises a supporting plate actuator (47.1, 47.r, 49),
wherein the supporting plate actuator (47.1, 47.r, 49)
- is positioned below the supporting plate (3) and
- is arranged to move the web moving member (3, 20, 48) towards the wrapping material inlet (15).

8. Bale forming and wrapping apparatus according to one of the preceding claims,
**characterized in that**
the web moving member (3, 20, 48) comprises a deflecting element (20) arranged to deflect a web (30) of wrapping material,
wherein the deflecting element (20) is positioned such that
the slack leading segment (35) of the web (30) which rests on the supporting plate (3) remains guided around the deflecting element (20) without being moved with respect to the deflecting element (20).

9. Bale forming and wrapping apparatus according to one of the preceding claims,
**characterized in that**
the bale forming and wrapping apparatus comprises a severing device (4, 5, 19) with a moveable severing element (5)
wherein the severing device (4, 5, 19)
- is positioned outside of the bale forming chamber and
- is arranged to sever a web (30) of wrapping material after the bale (B) in the bale forming chamber is wrapped
by moving the moveable severing element (5).

10. Bale forming and wrapping apparatus according to claim 9,
**characterized in that**
the moveable severing element (5) of the severing device (4, 5, 19) is mechanically connected with the web providing device (29),
wherein the web moving member (3, 20, 48) is moveable away from the wrapping material inlet (15) into a remote position and
wherein a movement of the web moving member (3, 20, 48) away from the wrapping material inlet (15) is coupled with a movement of the moveable severing element (5) towards the web (30) of wrapping material.

11. Bale forming and wrapping apparatus according to claim 9 or claim 10,
**characterized in that**
the severing device (4, 5, 19) is arranged to sever the web (30) at a severing location (50),
wherein the severing location (50) is positioned between
- the supporting plate (3) being in the remote position and
- the wrapping material inlet (15).

12. Bale forming and wrapping apparatus according to one of the claims 9 to 11,
**characterized in that**
the web providing device (29) comprises a guiding member actuator (7) and
the severing device (4, 5, 19) comprises a severing actuator (25),
wherein the guiding member actuator (7) is arranged to move the web moving member (3, 20, 48) towards the wrapping material inlet (15),
wherein the severing actuator (25) is arranged to move a moveable severing element (5) of the severing device (4, 5, 19) towards and against the web (30) of wrapping material, and
wherein the two actuators (7, 25) are operable independently from each other.

13. Bale forming and wrapping apparatus according to one of the claims 9 to 12,
**characterized in that**
the guiding member (2.1, 2.2, 2.3, 53.1, 53.r) is arranged to guide the web moving member (3, 20, 48)
- from a remote position towards the wrapping material inlet (15) into an adjacent position, thereby moving the web (30), and
- back from the adjacent position into the remote position,
wherein the bale forming and wrapping apparatus is arranged to trigger a movement of the moveable severing element (5) towards the web (30) of wrapping material
when the web moving member (3, 20, 48) is
- in the remote position or
- in a defined intermediate position between the remote position and the adjacent position.

14. Bale forming and wrapping apparatus according to one of the preceding claims,
**characterized in that**
the guiding member (2.1, 2.2, 2.3, 53.1, 53.r) is arranged to guide the web moving member (3, 20, 48)
- from a remote position towards the wrapping material inlet (15) into an adjacent position and
- back from the adjacent position into the remote position,
wherein the web moving member (3, 20, 48) being in the remote position is arranged to tension the inserted web (30) of wrapping material.

15. Bale forming and wrapping apparatus according to one of the preceding claims,
**characterized in that**
the web moving member (3, 20, 48) further comprises a downholder unit (48) positioned above the supporting plate (3),
wherein the downholder unit (48) is arranged to keep the slack leading segment (35) on the supporting plate (3) and below the downholder unit (48),
thereby preventing a relative movement of the leading segment (35) with respect to the supporting plate (3).

16. Bale forming and wrapping apparatus according to claim 15, **characterized in that**
the web moving member (3, 20, 48) comprises a mechanical coupling element (52.1, 52.r),
wherein the mechanical coupling element (52.1, 52.r) is arranged to inhibit a relative movement of the downholder unit (48) relative to the supporting plate (3) during a movement of a leading segment (35) towards the wrapping material inlet (15).

17. Bale forming method for forming a bale (B) from loose material,
wherein the method is performed by using a bale forming and wrapping apparatus comprising
- a bale forming means (40, 41.1, 41.2, 42, 44) providing a bale forming chamber and
- a web providing device (29) positioned outside of the bale forming chamber,
wherein the web providing device (29) comprises
- a web moving member (3, 20, 48) and
- a guiding member (2.1, 2.2, 2.3, 53.1, 53.r) for the web moving member (3, 20, 48), and
wherein the method comprises the steps that
- the bale forming and wrapping apparatus forms the bale (B) in the provided bale forming chamber,
- the web moving member (3, 20, 48) moves a web (30) of wrapping material towards a wrapping material inlet (15) which leads into the provided bale forming chamber,
- the guiding member (2.1, 2.2, 2.3, 53.1, 53.r) guides the web moving member (3, 20, 48) while the web moving member (3, 20, 48) moves the web (30),
- the moved web (30) is inserted through the wrapping material inlet (15) into the bale forming chamber, and
- the bale forming and wrapping apparatus wraps at least one surface of the bale (B) in the bale forming chamber into the inserted web (30),
**characterized in that**
the web moving member (3, 20, 48) further comprises a supporting plate (3) for the web (30),
wherein the step that the web moving member (3, 20, 48) moves the web (30) towards the wrapping material inlet (15) comprises the steps that
- the supporting plate (3) supports from below a slack leading segment (35) of the web (30) of wrapping material,
- the supporting plate (3) supporting the slack leading segment (35) is moved towards the wrapping material inlet (15), and
- the leading segment (35) on the supporting plate (3) remains slack while the web (30) is moved until the moved web (30) reaches the wrapping material inlet (15) and
wherein the step that the moved web (30) is inserted comprises the step that the slack leading segment (35) is inserted into the bale forming chamber.

18. Bale forming method according to claim 17,
**characterized in that**
the step that the guiding member (2.1, 2.2, 2.3, 53.1, 53.r) guides the web moving member (3, 20, 48)
comprises the step that the guiding member (2.1, 2.2, 2.3, 53.l, 53.r) guides the supporting plate (3) along a substantially linear path.

19. Bale forming method according to claim 17 or claim 18,
**characterized in that**
the bale forming and wrapping apparatus comprises a severing device (4, 5, 19), wherein the severing device (4, 5, 19) comprises a moveable severing element (5) which is mechanically connected with the web providing device (29) and
wherein the method comprises the further step that the web moving member (3, 20, 48) is moved away from the wrapping material inlet (15) after the moved web (30) is inserted and
the movement of the web moving member (3, 20, 48) away from the wrapping material inlet (15) causes
- the moveable severing element (5) to be moved towards the web (30) and
- the severing device (4, 5, 19) to sever the injected web (30).

20. Bale forming method according to one of the claims 17 to 19,
**characterized in that**
the step that the web moving member (3, 20, 48) moves the web (30) towards the wrapping material inlet (15)
comprises the step that the web moving member (3, 20, 48) is moved from a remote position towards the wrapping material inlet (15) into an adjacent position and
the method comprises the further steps that
- the web moving member (3, 20, 48) together with the web (30) is moved back from the adjacent position into the remote position after the web (30) is inserted and
- the back movement tensions the inserted web (30).

21. Bale forming method according to one of the claims 17 to 20,
**characterized in that**
the web moving member (3, 20, 48) further comprises a downholder unit (48) positioned above the supporting plate (3),
wherein the step that the web moving member (3, 20, 48) moves the web (30) towards the wrapping material inlet (15) comprises the further steps that
- the web (30) is positioned between the supporting plate (3) and the downholder unit (48) and
- the downholder unit (48) keeps the slack leading segment (35) on the moved supporting plate (3).

## Patentansprüche

1. Ballenbildungs- und Umwicklungsvorrichtung mit
- einem ballenbildenden Mittel (40, 41.1, 41.2, 42, 44), welches eine ballenbildende Kammer bereitstellt, und
- einer ein Netz bereitstellenden Einrichtung (29), welche außerhalb der ballenbildenden Kammer angeordnet ist, wobei die ein Netz bereitstellende Einrichtung (29) aufweist
- ein das Netz bewegendes Element (3, 20, 48), welches eingerichtet ist zur Bewegung eines Netzes (30) eines Umwicklungsmaterials in Richtung eines Einlasses (15) für das Umwicklungsmaterial, der in die bereitgestellte ballenbildende Kammer führt, und
- einem Führungselement (2.1, 2.2, 2.3, 53.l, 53.r) für das das Netz bewegende Element (3, 20, 48),
wobei das ballenbildende Mittel (40, 41.1, 41.2, 42, 44) eingerichtet ist zur Bildung eines Ballens (B) in der bereitgestellten ballenbildenden Kammer,
wobei das Führungselement (2.1, 2.2, 2.3, 53.l, 53.r) eingerichtet ist zur Führung des das Netz bewegenden Elements (3, 20, 48) während das das Netz bewegende Element (3, 20, 48) das Netz (30) in Richtung des Einlasses (15) für das Umwicklungsmaterial bewegt und
wobei die Ballenbildungs- und Umwicklungsvorrichtung eingerichtet ist
- zur Einführung des bewegten Netzes (30) des Umwicklungsmaterials durch den Einlass (15) für das Umwicklungsmaterial in die ballenbildende Kammer und
- zum Einwickeln zumindest einer Oberfläche des Ballens (B) in der ballenbildenden Kammer in das eingeführte Netz (30) des Umwicklungsmaterials,
**dadurch gekennzeichnet, dass**
das das Netz bewegende Element (3, 20, 48) des Weiteren eine Trag-, Stütz- oder Lagerplatte (3) aufweist,
wobei die Trag-, Stütz- oder Lagerplatte (3)
- eingerichtet ist zum Tragen, Stützen oder Lagern eines losen Vordersegments (35) des Netzes (30) des Umwicklungsmaterials und
- bewegbar ist in Richtung des Einlasses (15) für das Umwicklungsmaterial,
wobei das das Netz bewegende Element (3, 20, 48) eingerichtet ist
- zur Bewegung des losen Vordersegments (35), welches auf der Trag-, Stütz- oder Lagerplatte (3) ruht oder liegt, in Richtung des Einlasses (15) für das Umwicklungsmaterial und
- zur Aufrechterhaltung der Anordnung des bewegten Vordersegments (35) auf der Trag-, Stütz- oder Lagerplatte (3) in einem losen Zustand, bis das Netz (30) den Einlass (15) für das Umwicklungsmaterial erreicht, und
wobei die Ballenbildungs- und Umwicklungsvorrichtung eingerichtet ist zur Einführung des losen Vordersegments (35) in die ballenbildende Kammer.

2. Ballenbildungs- und Umwicklungsvorrichtung nach Anspruch 1, **dadurch gekennzeichnet, dass** das Führungselement (2.1, 2.2, 2.3, 53.l, 53.r) eingerichtet ist zur Führung der Trag-, Stütz- oder Lagerplatte (3) entlang eines im Wesentlichen linearen Pfades, während das das Netz bewegende Element (3, 20, 48) in Richtung des Einlasses (15) für das Umwicklungsmaterial geführt wird.

3. Ballenbildungs- und Umwicklungsvorrichtung nach einem der vorhergehenden Ansprüche, **dadurch gekennzeichnet, dass** das Führungselement (2.1, 2.2, 2.3, 53.l, 53.r) als Parallelogramm-Führer implementiert ist.

4. Ballenbildungs- und Umwicklungsvorrichtung nach einem der vorhergehenden Ansprüche, **dadurch gekennzeichnet, dass** das Führungselement (2.1, 2.2, 2.3, 53.l, 53.r) aufweist
- ein verschwenkbares erstes Hebelarmelement (2.1),
- ein verschwenkbares zweites Hebelarmelement (2.2) und
- ein Lagerelement (2.3),
wobei das Lagerelement (2.3) mechanisch verbunden ist
- mit beiden Hebelarmelementen (2.1, 2.2) und
- mit dem das Netz bewegenden Element (3, 20, 48).

5. Ballenbildungs- und Umwicklungsvorrichtung nach Anspruch 4, **dadurch gekennzeichnet, dass** die das Netz bereitstellende Einrichtung (29) einen Führungselement-Aktuator (7) aufweist, wobei der Führungselement-Aktuator (7) eingerichtet ist zur Verschwenkung des ersten Hebelarmelements (2.1) in Richtung des Einlasses (15) für das Umwicklungsmaterial.

6. Ballenbildungs- und Umwicklungsvorrichtung nach Anspruch 4 oder 5, **dadurch gekennzeichnet, dass** das zweite Hebelarmelement (2.2) zwischen
- dem ersten Hebelarmelement (2.1) und
- dem Einlass (15) für das Umwicklungsmaterial
angeordnet ist.

7. Ballenbildungs- und Umwicklungsvorrichtung nach einem der vorhergehenden Ansprüche, **dadurch gekennzeichnet, dass** die das Netz bereitstellende Einrichtung (29) einen Aktuator (47.l, 47.r, 49) für die Trag-, Stütz- oder Lagerplatte aufweist,
wobei der Aktuator (47.l, 47.r, 49) für die Trag-, Stütz- oder Lagerplatte
- unter der Trag-, Stütz- oder Lagerplatte (3) angeordnet ist und
- eingerichtet ist zur Bewegung des das Netz bewegenden Elements (3, 20, 48) in Richtung des Einlasses (15) für das Umwicklungsmaterial.

8. Ballenbildungs- und Umwicklungsvorrichtung nach einem der vorhergehenden Ansprüche, **dadurch gekennzeichnet, dass** das das Netz bewegende Element (3, 20, 48) ein Umlenkelement (20) aufweist, welches eingerichtet ist zur Umlenkung eines Netzes (30) des Umwicklungsmaterials, wobei das Umlenkelement (20) derart angeordnet ist, dass die Führung des losen Vordersegments (35) des Netzes (30), welches auf der Trag-, Stütz- oder Lagerplatte (3) liegt oder ruht, um das Umlenkelement (20) aufrechterhalten bleibt, ohne dass eine Bewegung gegenüber dem Umlenkelement (20) erfolgt.

9. Ballenbildungs- und Umwicklungsvorrichtung nach einem der vorhergehenden Ansprüche, **dadurch gekennzeichnet, dass** die Ballenbildungs- und Umwicklungsvorrichtung eine Trenneinrichtung (4, 5, 19) mit einem bewegbaren Trennelement (5) aufweist, wobei die Trenneinrichtung (4, 5, 19)
- außerhalb der ballenbildenden Kammer angeordnet ist und
- eingerichtet ist zur Durchtrennung eines Netzes (30) des Umwicklungsmaterials durch eine Bewegung des bewegbaren Trennelements (5), nachdem der Ballen (B) in der ballenbildenden Kammer umwickelt worden ist.

10. Ballenbildungs- und Umwicklungsvorrichtung nach Anspruch 9, **dadurch gekennzeichnet, dass** das bewegbare Trennelement (5) der Trenneinrichtung (4, 5, 19) mechanisch mit der das Netz bereitstellenden Einrichtung (29) verbunden ist,
wobei das das Netz bewegende Element (3, 20, 48) von dem Einlass (15) für das Umwicklungsmaterial weg bewegbar ist in eine abgelegene Stellung und
wobei eine Bewegung des das Netz bewegenden Elements (3, 20, 48) weg von dem Einlass (15) für das Umwicklungsmaterial gekoppelt ist mit einer Bewegung des bewegbaren Trennelements (5) in Richtung des Netzes (30) des Umwicklungsmaterials.

11. Ballenbildungs- und Umwicklungsvorrichtung nach Anspruch 9 oder 10, **dadurch gekennzeichnet, dass** die Trenneinrichtung (4, 5, 19) eingerichtet ist zum Durchtrennen des Netzes (30) an einem Trennort (50),
wobei der Trennort (50) zwischen
- der Trag-, Stütz- oder Lagerplatte (3), die sich in der abgelegenen Stellung befindet, und
- dem Einlass (15) für das Umwicklungsmaterial
angeordnet ist.

12. Ballenbildungs- und Umwicklungsvorrichtung nach einem der Ansprüche 9 bis 11, **dadurch gekennzeichnet, dass**
die das Netz bereitstellende Einrichtung (29) einen Führungselement-Aktuator (7) aufweist und die Trenneinrichtung (4, 5, 19) einen Trenn-Aktuator (25) aufweist,
wobei der Führungselement-Aktuator (7) eingerichtet ist zur Bewegung des das Netz bewegenden Elements (3, 20, 48) in Richtung des Einlasses (15) für das Umwicklungsmaterial, wobei der Trenn-Aktuator (25) eingerichtet ist zur Bewegung eines bewegbaren Trennelements (5) der Trenneinrichtung (4, 5, 19) in Richtung und gegen das Netz (30) des Umwicklungsmaterials und
wobei die beiden Aktuatoren (7, 25) unabhängig voneinander betreibbar sind.

13. Ballenbildungs- und Umwicklungsvorrichtung nach einem der Ansprüche 9 bis 12, **dadurch gekennzeichnet, dass** das Führungselement (2.1, 2.2, 2.3, 53.l, 53.r) eingerichtet ist zur Führung des das Netz bewegenden Elements (3, 20, 48)
- von einer abgelegenen Stellung in Richtung des Einlasses (15) für das Umwicklungsmaterial in eine benachbarte Stellung, wodurch das Netz (30) bewegt wird, und
- zurück von der benachbarten Stellung in die abgelegene Stellung,
wobei die Ballenbildungs- und Umwicklungsvorrichtung eingerichtet ist zum Auslösen einer Bewegung des bewegbaren Trennelements (5) in Richtung des Netzes (30) des Umwicklungsmaterials wenn sich das das Netz bewegende Element (3, 20, 48)
- in der abgelegenen Stellung oder
- in einer definierten Zwischenstellung zwischen der abgelegenen Stellung und der benachbarten Stellung
befindet.

14. Ballenbildungs- und Umwicklungsvorrichtung nach einem der vorhergehenden Ansprüche, **dadurch gekennzeichnet, dass** das Führungselement (2.1, 2.2, 2.3, 53.l, 53.r) eingerichtet ist zur Führung des das Netz bewegenden Elements (3, 20, 48)
- von einer abgelegenen Stellung in Richtung des Einlasses (15) für das Umwicklungsmaterial in eine benachbarte Stellung und
- zurück von der benachbarten Stellung in die abgelegene Stellung,
wobei das das Netz bewegende Element (3, 20, 48) bei Anordnung in der abgelegenen Stellung eingerichtet ist zur Spannung des eingeführten Netzes (30) des Umwicklungsmaterials.

15. Ballenbildungs- und Umwicklungsvorrichtung nach einem der vorhergehenden Ansprüche, **dadurch gekennzeichnet, dass** das das Netz bewegende Element (3, 20, 48) weiterhin eine Niederhaltereinheit (48) aufweist, die über der Trag-, Stütz- oder Lagerplatte (3) angeordnet ist,
wobei die Niederhaltereinheit (48) eingerichtet ist zum Halten des losen Vordersegments (35) auf der Trag-, Stütz- oder Lagerplatte (3) und unter der Niederhaltereinheit (48),
wodurch eine Relativbewegung des Vordersegments (35) gegenüber der Trag-, Stütz- oder Lagerplatte (3) vermieden wird.

16. Ballenbildungs- und Umwicklungsvorrichtung nach Anspruch 15, **dadurch gekennzeichnet, dass** das das Netz bewegende Element (3, 20, 48) ein mechanisches Kopplungselement (52.l, 52.r) aufweist,
wobei das mechanische Kopplungselement (52.l, 52.r) eingerichtet ist zur Vermeidung einer Relativbewegung der Niederhaltereinheit (48) gegenüber der Trag-, Stütz- oder Lagerplatte (3) während einer Bewegung eines Vordersegments (35) in Richtung des Einlasses (15) für das Umwicklungsmaterial.

17. Ballenbildungsverfahren zum Bilden eines Ballens (B) aus losem Material,
wobei das Verfahren ausgeführt wird unter Verwendung einer Ballenbildungs- und Umwicklungsvorrichtung mit
- einem ballenbildenden Mittel (40, 41.1, 41.2, 42, 44), welches eine ballenbildende Kammer bereitstellt, und
- einer ein Netz bereitstellenden Einrichtung (29), welche außerhalb der ballenbildenden Kammer angeordnet ist,
wobei die das Netz bereitstellende Einrichtung (29) aufweist
- ein das Netz bewegendes Element (3, 20, 48) und
- ein Führungselement (2.1, 2.2, 2.3, 53.l, 53.r) für das das Netz bewegende Element (3, 20, 48) und
wobei das Verfahren die Verfahrensschritte aufweist, dass
- die Ballenbildungs- und Umwicklungsvorrichtung den Ballen (B) in der bereitgestellten ballenbildenden Kammer bildet,
- das das Netz bewegende Element (3, 20, 48) ein Netz (30) des Umwicklungsmaterials in Richtung eines Einlasses (15) für das Umwicklungsmaterial, der in die bereitgestellte ballenbildende Kammer führt, bewegt,
- das Führungselement (2.1, 2.2, 2.3, 53.l, 53.r) das das Netz bewegende Element (3, 20, 48) führt, während das das Netz bewegende Element (3, 20, 48) das Netz (30) bewegt,
- das bewegte Netz (30) durch den Einlass (15) für das Umwicklungsmaterial in die ballenbildende Kammer eingeführt wird und
- die Ballenbildungs- und Umwicklungsvorrichtung zumindest eine Oberfläche des Ballens (B) in der ballenbildenden Kammer in das eingeführte Netz (30) wickelt,
**dadurch gekennzeichnet, dass**
das das Netz bewegende Element (3, 20, 48) darüber hinaus eine Trag-, Stütz- oder Lagerplatte (3) für das Netz (30) aufweist,
wobei der Verfahrensschritt, dass das das Netz bewegende Element (3, 20, 48) das Netz (30) in Richtung des Einlasses (15) für das Umwicklungsmaterial bewegt, die Verfahrensschritte aufweist, dass
- die Trag-, Stütz- oder Lagerplatte (3) von unten ein loses Vordersegment (35) des Netzes (30) des Umwicklungsmaterials trägt, stützt oder lagert,
- die Trag-, Stütz- oder Lagerplatte (3), die das lose Vordersegment (35) trägt, stützt oder lagert, in Richtung des Einlasses (15) für das Umwicklungsmaterial bewegt wird und
- das Vordersegment (35) auf der Trag-, Stütz- oder Lagerplatte (3) lose bleibt, während das Netz (30) bewegt wird, bis das bewegte Netz (30) den Einlass (15) für das Umwicklungsmaterial erreicht, und
wobei der Verfahrensschritt, dass das bewegte Netz (30) eingeführt wird, den Verfahrensschritt aufweist, dass das lose Vordersegment (35) in die ballenbildende Kammer eingeführt wird.

18. Ballenbildungsverfahren nach Anspruch 17, **dadurch gekennzeichnet, dass** der Verfahrensschritt, dass das Führungselement (2.1, 2.2, 2.3, 53.l, 53.r) das das Netz bewegende Element (3, 20, 48) führt, den Verfahrensschritt aufweist, dass das Führungselement (2.1, 2.2, 2.3, 53.l, 53.r) die Trag-, Stütz- oder Lagerplatte (3) entlang eines im Wesentlichen linearen Pfads führt.

19. Ballenbildungsverfahren nach Anspruch 17 oder 18, **dadurch gekennzeichnet, dass** die Ballenbildungs- und Umwicklungsvorrichtung eine Trenneinrichtung (4, 5, 19) aufweist, wobei die Trenneinrichtung (4, 5, 19) ein bewegbares Trennelement (5) aufweist, welches mechanisch mit der das Netz bereitstellenden Einrichtung (29) verbunden ist und
wobei das Verfahren den weiteren Verfahrensschritt aufweist, dass das das Netz bewegende Element (3, 20, 48) von dem Einlass (15) für das Umwicklungsmaterial wegbewegt wird, nachdem das bewegte Netz (30) eingeführt ist, und
die Bewegung des das Netz bewegenden Elements (3, 20, 48) weg von dem Einlass (15) für das Umwicklungsmaterial verursacht, dass
- das bewegbare Trennelement (5) in Richtung des Netzes (30) bewegt wird und
- die Trenneinrichtung (4, 5, 19) das eingeführte Netz (30) durchtrennt.

20. Ballenbildungsverfahren nach einem der Ansprüche 17 bis 19, **dadurch gekennzeichnet, dass** der Verfahrensschritt, dass das das Netz bewegende Element (3, 20, 48) das Netz (30) in Richtung des Einlasses (15) für das Umwicklungsmaterial bewegt, den Verfahrensschritt aufweist, dass das das Netz bewegende Element (3, 20, 48) von einer abgelegenen Stellung in Richtung des Einlasses (15) für das Umwicklungsmaterial in eine benachbarte Stellung bewegt wird und
das Verfahren die weiteren Verfahrensschritte aufweist, dass
- das das Netz bewegende Element (3, 20, 48) zusammen mit dem Netz (30) zurückbewegt wird von der benachbarten Stellung in die abgelegene Stellung, nachdem das Netz (30) eingeführt ist,
- die Rückbewegung das eingeführte Netz (30) spannt.

21. Ballenbildungsverfahren nach einem der Ansprüche 17 bis 20, **dadurch gekennzeichnet, dass** das das Netz bewegende Element (3, 20, 48) darüber hinaus eine Niederhaltereinheit (48) aufweist, die über der Trag-, Stütz- oder Lagerplatte (3) angeordnet ist,
wobei der Verfahrensschritt, dass das das Netz bewegende Element (3, 20, 48) das Netz (30) in Richtung des Einlasses (15) für das Umwicklungsmaterial bewegt, die weiteren Verfahrensschritte aufweist, dass
- das Netz (30) zwischen der Trag-, Stütz- oder Lagerplatte (3) und der Niederhaltereinheit (48) angeordnet wird und
- die Niederhaltereinheit (48) die Anordnung des losen Vordersegments (35) auf der bewegten Trag-, Stütz- oder Lagerplatte (3) aufrecht erhält.

## Revendications

1. Appareil de formation et d'emballage de balles comprenant
- un moyen de formation de balles (40, 41.1, 41.2, 42, 44) fournissant une chambre de formation de balles et
- un dispositif de fourniture de bande (29) positionné à l'extérieur de la chambre de formation de balles, dans lequel le dispositif de fourniture de bande (29) comprend
- un élément de déplacement de bande (3, 20, 48) agencé pour déplacer une bande (30) de matériau d'emballage vers une entrée de matériau d'emballage (15) qui conduit dans la chambre de formation de balles fournie et
- un élément de guidage (2.1, 2.2, 2.3, 53.1, 53.r) pour l'élément de déplacement de bande (3, 20, 48),
dans lequel le moyen de formation de balles (40, 41.1, 41.2, 42, 44) est agencé pour former une balle (B) dans la chambre de formation de balles fournie,
dans lequel l'élément de guidage (2.1, 2.2, 2.3, 53.l, 53.r) est agencé pour guider l'élément de déplacement de bande (3, 20, 48) tandis que l'élément de déplacement de bande (3, 20, 48) déplace la bande (30) vers l'entrée de matériau d'emballage (15), et
dans lequel l'appareil de formation et d'emballage de balles est agencé
- pour insérer la bande déplacée (30) du matériau d'emballage par l'entrée du matériau d'emballage (15) dans la chambre de formation de balles, et
- pour emballer au moins une surface de la balle (B) dans la chambre de formation de balles dans la bande insérée (30) du matériau d'emballage,
**caractérisé en ce que**
l'élément de déplacement de bande (3, 20, 48) comprend en outre une plaque de support (3),
dans lequel la plaque de support (3)
- est agencée pour supporter du dessous un segment avant lâche (35) de la bande (30) de matériau d'emballage et
- peut être déplacée vers l'entrée du matériau d'emballage (15),
dans lequel l'élément de déplacement de bande (3, 20, 48) est agencé
- pour déplacer le segment avant lâche (35) reposant sur la plaque de support (3) vers l'entrée du matériau d'emballage (15) et
- pour garder le segment avant déplacé (35) qui est positionné sur la plaque de support (3) dans un état lâche jusqu'à ce que la bande (30) atteigne l'entrée du matériau d'emballage (15) et
dans lequel l'appareil de formation et d'emballage de balles est agencé pour insérer le segment avant lâche (35) dans la chambre de formation de balles.

2. Appareil de formation et d'emballage de balles selon la revendication 1,
**caractérisé en ce que**
l'élément de guidage (2.1, 2.2, 2.3, 53.l, 53.r) est agencé pour guider la plaque de support (3) le long d'un trajet sensiblement linéaire
tout en guidant l'élément de déplacement de bande (3, 20, 48) vers l'entrée de matériau d'emballage (15).

3. Appareil de formation et d'emballage de balles selon l'une quelconque des revendications précédentes,
**caractérisé en ce que**
l'élément de guidage (2.1, 2.2, 2.3, 53.l, 53.r) est mis en oeuvre en tant que guide de parallélogramme.

4. Appareil de formation et d'emballage de balles selon l'une quelconque des revendications précédentes,
**caractérisé en ce que**
l'élément de guidage (2.1, 2.2, 2.3, 53.l, 53.r) comprend
- un premier élément de bras de levier central (2.1),
- un second élément de bras de levier central (2.2), et
- un élément de palier (2.3),
dans lequel l'élément de palier (2.3) est raccordé mécaniquement
- aux deux éléments de bras de levier (2.1, 2.2) et
- à l'élément de déplacement de bande (3, 20, 48).

5. Appareil de formation et d'emballage de balles selon la revendication 4,
**caractérisé en ce que**
le dispositif de fourniture de bande (29) comprend un actionneur d'élément de guidage (7),
dans lequel l'actionneur d'élément de guidage (7) est agencé pour faire pivoter le premier élément de bras de levier (2.1) vers l'entrée du matériau d'emballage (15) .

6. Appareil de formation et d'emballage de balles selon la revendication 4 ou 5,
**caractérisé en ce que**
le second élément de bras de levier (2.2) est positionné entre
- le premier élément de bras de levier (2.1) et
- l'entrée du matériau d'emballage (15).

7. Appareil de formation et d'emballage de balles selon l'une quelconque des revendications précédentes,
**caractérisé en ce que**
le dispositif de fourniture de bande (29) comprend un actionneur de plaque de support (47.1, 47.r, 49),
dans lequel l'actionneur de plaque de support (47.1, 47.r, 49)
- est positionné en dessous de la plaque de support (3) et
- est agencé pour déplacer l'élément de déplacement de bande (3, 20, 48) vers l'entrée du matériau d'emballage (15).

8. Appareil de formation et d'emballage de balles selon l'une quelconque des revendications précédentes,
**caractérisé en ce que**
l'élément de déplacement de bande (3, 20, 48) comprend un élément déflecteur (20) agencé pour dévier une bande (30) du matériau d'emballage,
dans lequel l'élément déflecteur (20) est positionné de sorte que le segment avant lâche (35) de la bande (30) qui repose sur la plaque de support (3) reste guidé autour de l'élément déflecteur (20) sans être déplacé par rapport à l'élément déflecteur (20).

9. Appareil de formation et d'emballage de balles selon l'une quelconque des revendications précédentes,
**caractérisé en ce que**
l'appareil de formation et d'emballage de balles comprend un dispositif de sectionnement (4, 5, 19) doté d'un élément de sectionnement mobile (5),
dans lequel le dispositif de sectionnement (4, 5, 19)
- est positionné à l'extérieur de la chambre de formation de balles et
- est agencé pour sectionner une bande (30) de matériau d'emballage après que la balle (B) dans la chambre de formation de balles est emballée
par déplacement de l'élément de sectionnement mobile (5).

10. Appareil de formation et d'emballage de balles selon la revendication 9,
**caractérisé en ce que**
l'élément de sectionnement mobile (5) du dispositif de sectionnement (4, 5, 19) est raccordé mécaniquement au dispositif de fourniture de bande (29),
dans lequel l'élément de déplacement de bande (3, 20, 48) peut être éloigné de l'entrée du matériau d'emballage (15) dans une position distante et
dans lequel un éloignement de l'élément de déplacement de bande (3, 20, 48) de l'entrée du matériau d'emballage (15) est couplé à un mouvement de l'élément de sectionnement mobile (5) vers la bande (30) de matériau d'emballage.

11. Appareil de formation et d'emballage de balles selon la revendication 9 ou la revendication 10,
**caractérisé en ce que**
le dispositif de sectionnement (4, 5, 19) est agencé pour sectionner la bande (30) sur un emplacement de sectionnement (50),
dans lequel l'emplacement de sectionnement (50) est positionné entre
- la plaque de support (3) qui est dans la position distante et
- l'entrée de matériau d'emballage (15).

12. Appareil de formation et d'emballage de balles selon l'une quelconque des revendications 9 à 11,
**caractérisé en ce que**
le dispositif de fourniture de bande (29) comprend un actionneur d'élément de guidage (7) et le dispositif de sectionnement (4, 5, 19) comprend un actionneur de sectionnement (25),
dans lequel l'actionneur d'élément de guidage (7) est agencé pour déplacer l'élément de déplacement de bande (3, 20, 48) vers l'entrée du matériau d'emballage (15),
dans lequel l'actionneur de sectionnement (25) est agencé pour déplacer un élément de sectionnement mobile (5) du dispositif de sectionnement (4, 5, 19) vers et contre la bande (30) du matériau d'emballage, et
dans lequel les deux actionneurs (7, 25) peuvent être actionnés indépendamment l'un de l'autre.

13. Appareil de formation et d'emballage de balles selon l'une quelconque des revendications 9 à 12,
**caractérisé en ce que**
l'élément de guidage (2.1, 2.2, 2.3, 53.l, 53.r) est agencé pour guider l'élément de déplacement de bande (3, 20, 48)
- d'une position distante vers l'entrée du matériau d'emballage (15) dans une position adjacente, déplaçant ainsi la bande (30), et
- revenir de la position adjacente à la position distante,
dans lequel l'appareil de formation et d'emballage de balles est agencé pour déclencher un mouvement de l'élément de sectionnement mobile (5) vers la bande (30) du matériau d'emballage
lorsque l'élément de déplacement de bande (3, 20, 48) est
- dans la position distante ou
- dans une position intermédiaire définie entre la position distante et la position adjacente.

14. Appareil de formation et d'emballage de balles selon l'une quelconque des revendications précédentes,
**caractérisé en ce que**
l'élément de guidage (2.1, 2.2, 2.3, 53.l, 53.r) est agencé pour guider l'élément de déplacement de bande (3, 20, 48)
- d'une position distante vers l'entrée de matériau d'emballage (15) à une position adjacente et
- revenir de la position adjacente à la position distante,
dans lequel l'élément de déplacement de bande (3, 20, 48) qui est dans la position distante est agencé pour tendre la bande insérée (30) du matériau d'emballage.

15. Appareil de formation et d'emballage de balles selon l'une quelconque des revendications précédentes,
**caractérisé en ce que**
l'élément de déplacement de bande (3, 20, 48) comprend en outre une unité de dispositif de retenue (48) positionnée au-dessus de la plaque de support (3),
dans lequel l'unité de dispositif de retenue (48) est agencée pour maintenir le segment avant lâche (35) sur la plaque de support (3) et sous l'unité de dispositif de retenue (48),
empêchant ainsi un mouvement relatif du segment avant (35) par rapport à la plaque de support (3).

16. Appareil de formation et d'emballage de balles selon la revendication 15,
**caractérisé en ce que**
l'élément de déplacement de bande (3, 20, 48) comprend un élément de couplage mécanique (52.1, 52.r),
dans lequel l'élément de couplage mécanique (52.1, 52.r) est agencé pour empêcher un mouvement relatif de l'unité de dispositif de retenue (48) par rapport à la plaque de support (3) pendant un mouvement d'un segment avant (35) vers l'entrée du matériau d'emballage (15).

17. Procédé de formation de balles pour former une balle (B) à partir d'un matériau en vrac,
dans lequel le procédé est réalisé en utilisant un appareil de formation et d'emballage de balles comprenant
- un moyen de formation de balles (40, 41.1, 41.2, 42, 44) fournissant une chambre de formation de balles et
- un dispositif de fourniture de bande (29) positionné à l'extérieur de la chambre de formation de balles,
dans lequel le dispositif de fourniture de bande (29) comprend
- un élément de déplacement de bande (3, 20, 48) et
- un élément de guidage (2.1, 2.2, 2.3, 53.1, 53.r) pour l'élément de déplacement de bande (3, 20, 48), et
dans lequel le procédé comprend les étapes selon lesquelles
- l'appareil de formation et d'emballage de balles forme la balle (B) dans la chambre de formation de balles fournie,
- l'élément de déplacement de bande (3, 20, 48) déplace une bande (30) de matériau d'emballage vers une entrée de matériau d'emballage (15) qui conduit dans la chambre de formation de bande fournie,
- l'élément de guidage (2.1, 2.2, 2.3, 53.l, 53.r) guide l'élément de déplacement de bande (3, 20, 48) tandis que l'élément de déplacement de bande (3, 20, 48) déplace la bande (30),
- la bande déplacée (30) est insérée par l'entrée de matériau d'emballage (15) dans la chambre de formation de balles, et
- l'appareil de formation et d'emballage de balles emballe au moins une surface de la balle (B) dans la chambre de formation de balles dans la bande insérée (30),
**caractérisé en ce que**
l'élément de déplacement de bande (3, 20, 48) comprend en outre une plaque de support (3) pour la bande (30),
dans lequel l'étape selon laquelle l'élément de déplacement de bande (3, 20, 48) déplace la bande (30) vers l'entrée du matériau d'emballage (15) comprend les étapes selon lesquelles
- la plaque de support (3) supporte du dessous un segment avant lâche (35) de la bande (30) de matériau d'emballage,
- la plaque de support (3) supportant le segment avant lâche (35) est déplacée vers l'entrée du matériau d'emballage (15), et
- le segment avant (35) sur la plaque de support (3) reste lâche tandis que la bande (30) se déplace jusqu'à ce que la bande déplacée (30) atteigne l'entrée du matériau d'emballage (15) et
dans lequel l'étape selon laquelle la bande déplacée (30) est insérée comprend l'étape selon laquelle le segment avant lâche (35) est inséré dans la chambre de formation de balles.

18. Procédé de formation de balles selon la revendication 17,
**caractérisé en ce que**
l'étape selon laquelle l'élément de guidage (2.1, 2.2, 2.3, 53.l, 53.r) guide l'élément de déplacement de bande (3, 20, 48)
comprend l'étape selon laquelle l'élément de guidage (2.1, 2.2, 2.3, 53.l, 53.r) guide la plaque de support (3) le long d'un trajet sensiblement linéaire.

19. Procédé de formation de balles selon la revendication 17 ou la revendication 18,
**caractérisé en ce que**
l'appareil de formation et d'emballage de balles comprend un dispositif de sectionnement (4, 5, 19),
dans lequel le dispositif de sectionnement (4, 5, 19) comprend un élément de sectionnement mobile (5) qui est raccordé mécaniquement au dispositif de fourniture de bande (29) et
dans lequel le procédé comprend l'étape supplémentaire selon laquelle l'élément de déplacement de bande (3, 20, 48) est éloigné de l'entrée du matériau d'emballage (15) après que la bande déplacée (30) est insérée et
l'éloignement de l'élément de déplacement de bande (3, 20, 48) de l'entrée du matériau d'emballage (15) entraîne
- le déplacement de l'élément de sectionnement mobile (5) vers la bande (30) et
- le sectionnement par le dispositif de sectionnement (4, 5, 19) de la bande injectée (30).

20. Procédé de formation de balles selon l'une quelconque des revendications 17 à 19,
**caractérisé en ce que**
l'étape selon laquelle l'élément de déplacement de bande (3, 20, 48) déplace la bande (30) vers l'entrée du matériau d'emballage (15)
comprend l'étape selon laquelle l'élément de déplacement de bande (3, 20, 48) est déplacé d'une position distante vers l'entrée du matériau d'emballage (15) à une position adjacente et
le procédé comprend les étapes supplémentaires selon lesquelles
- l'élément de déplacement de bande (3, 20, 48) conjointement avec la bande (30) revient de la position adjacente à la position distante après que la bande (30) est insérée et
- le mouvement de retour tend la bande insérée (30).

21. Procédé de formation de balles selon l'une quelconque des revendications 17 à 20,
**caractérisé en ce que**
l'élément de déplacement de bande (3, 20, 48) comprend en outre une unité de dispositif de retenue (48) positionnée au-dessus de la plaque de support (3),
dans lequel l'étape selon laquelle l'élément de déplacement de bande (3, 20, 48) déplace la bande (30) vers l'entrée du matériau d'emballage (15) comprend les étapes supplémentaires selon lesquelles
- la bande (30) est positionnée entre la plaque de support (3) et l'unité de dispositif de retenue (48) et
- l'unité de dispositif de retenue (48) maintient le segment avant lâche (35) sur la plaque de support déplacée (3).
